# EUROPEAN PATENT APPLICATION

(11) **EP 4 806 246 A1**
(43) Date of publication of application: **16.09.2026**
(21) Application number: 26163356.4
(22) Date of filing: 09.03.2026
(51) Int. Cl.: A01B 69/04

(54) **CONTROL METHOD FOR WORK VEHICLE, WORK VEHICLE CONTROL PROGRAM, WORK VEHICLE CONTROL SYSTEM, AND WORK SYSTEM**

(30) Priority: 10.03.2025 JP 2025037226; 28.11.2025 JP 2025208396
(71) Applicant: Yanmar Holdings Co., Ltd., Osaka (JP)
(72) Inventor: MIYAKE, Koji, Okayama-shi (JP); KURODA, Tomoyuki, Okayama-shi (JP); ISHIDA, Hiroyasu, Okayama-shi (JP); ONISHI, Kenta, Okayama-shi (JP); TAKAHASHI, Mamoru, Okayama-shi (JP); KIYOSAWA, Yu, Okayama-shi (JP); KATO, Mikiya, Osaka-shi (JP); MUKAI, Kota, Osaka-shi (JP); ENDO, Taisei, Osaka-shi (JP)
(74) Representative: Sekiguchi, Kazuya

(57) **Abstract**

[Problem] To provide a control method for a work vehicle, a work vehicle control program, a work vehicle control system, and a work system capable of causing a work vehicle to travel along a more appropriate route.

[Solution] A control method for a work vehicle 10 is a control method for the work vehicle 10 capable of working while traveling in a work site F1. This control method includes setting an allowable limit distance L1, and changing a margin value. The allowable limit distance L1 is defined using the margin value based on the work vehicle 10, and is a limit that allows the work vehicle 10 to approach an outline (fourth outline f14) of the work site F1.

## Description

### TECHNICAL FIELD

The present invention relates to a control method for a work vehicle capable of working while traveling in a work site, a work vehicle control program, a work vehicle control system, and a work system.

### BACKGROUND ART

As a related art, there is known a technique of setting a boundary line in a ridge region to avoid contact between a machine body and ridges (boundary objects) in a work vehicle (agricultural work vehicle) capable of self-traveling in a work site (field surface) bounded by the ridges (see, for example, Patent Document 1.). The work vehicle according to the related art includes a machine body position calculation unit that calculates a machine body position, and a boundary crossing prevention control unit that prohibits traveling of crossing a boundary line based on the boundary line and the machine body position. The work vehicle travels only inside the boundary line to avoid contact between the machine body and the ridges. The boundary line indicates a position of the machine body that is a limit for the work vehicle to avoid contact with ridges around the work site, and as long as the position of the machine body does not cross the boundary line, the work vehicle does not come into contact with the boundary objects such as the ridges.

The work vehicle according to the related art further includes a cross-boundary permission unit that permits a state in which the machine body crosses the boundary line by a cross-boundary permission command, and a cross-boundary permission command unit that outputs the cross-boundary permission command to the cross-boundary permission unit based on a traveling control state. For example, in a case where seedling supply needs to be performed to the work vehicle during seedling planting work in reciprocating straight traveling, the cross-boundary permission command is given in seedling supply processing that uses a remote controller operation.

### PRIOR ART DOCUMENT

### PATENT DOCUMENT

Patent Document 1: JP-A-2021-108597

### SUMMARY OF INVENTION

### TECHNICAL PROBLEM

In a configuration of the related art described above, the position of the boundary line is constant unless the cross-boundary permission command is given at the timing of seedling supply or the like. For example, even in a situation where there is no risk of contact even if the work vehicle is further moved to the outline (ridge) of the work site, such as a case where the work vehicle is traveling at a low speed, it is difficult to cause the work vehicle to travel along such a route.

An object of the present invention is to provide a control method for a work vehicle, a work vehicle control program, a work vehicle control system, and a work system capable of causing a work vehicle to travel along a more appropriate route.

### SOLUTION TO PROBLEM

A control method for a work vehicle according to one aspect of the present invention is a control method for a work vehicle capable of working while traveling in a work site, including: setting an allowable limit distance that is defined using a margin value based on the work vehicle and is a limit that allows the work vehicle to approach an outline of the work site; and changing the margin value.

A work vehicle control program according to one aspect of the present invention is a program for causing one or more processors to execute the control method for a work vehicle.

A work vehicle control system according to one aspect of the present invention is used for a work vehicle capable of working while self-traveling in a work site. The work vehicle control system includes a setting processing unit and a change processing unit. The setting processing unit sets an allowable limit distance that is defined using a margin value based on the work vehicle and is a limit that allows the work vehicle to approach an outline of the work site. The change processing unit changes the margin value.

A work system according to one aspect of the present invention includes the work vehicle control system and a machine body of the work vehicle.

### ADVANTAGEOUS EFFECTS OF INVENTION

According to the present invention, it is possible to provide a control method for a work vehicle, a work vehicle control program, a work vehicle control system, and a work system capable of causing a work vehicle to travel along a more appropriate route.

### BRIEF DESCRIPTION OF DRAWINGS

Fig. 1 is a schematic side view showing an external appearance of a work vehicle according to a first embodiment;
Fig. 2 is a schematic block diagram of a work system according to the first embodiment;
Fig. 3 is a schematic diagram showing an example of a target route in the work system according to the first embodiment;
Fig. 4 is a schematic plan view showing an operation example of the work vehicle according to the first embodiment;
Fig. 5 is a schematic diagram showing an example of a target route generated by a work vehicle control system according to the first embodiment;
Fig. 6 is a schematic view showing an example of an allowable limit distance used in the work vehicle control system according to the first embodiment;
Fig. 7 is a schematic view showing an example of the allowable limit distance used in the work vehicle control system according to the first embodiment;
Fig. 8 is a schematic view showing an example of the allowable limit distance used in the work vehicle control system according to the first embodiment;
Fig. 9 is a schematic view showing an example of the allowable limit distance used in the work vehicle control system according to the first embodiment;
Fig. 10 is a flowchart showing an operation example of the work vehicle control system according to the first embodiment;
Fig. 11 is a schematic view showing an example of an allowable limit distance used in a work vehicle control system according to a modification;
Fig. 12 is a schematic view showing an example of an allowable limit distance used in a work vehicle control system according to a second embodiment; and
Fig. 13 is a schematic view showing an example of an allowable limit distance used in a work vehicle control system according to a third embodiment.

### DESCRIPTION OF EMBODIMENTS

Hereinafter, embodiments of the present invention will be described with reference to the accompanying drawings. The following embodiments are examples embodying the present invention, and are not intended to limit the technical scope of the present invention.

### (First embodiment)

### [1] Entire configuration

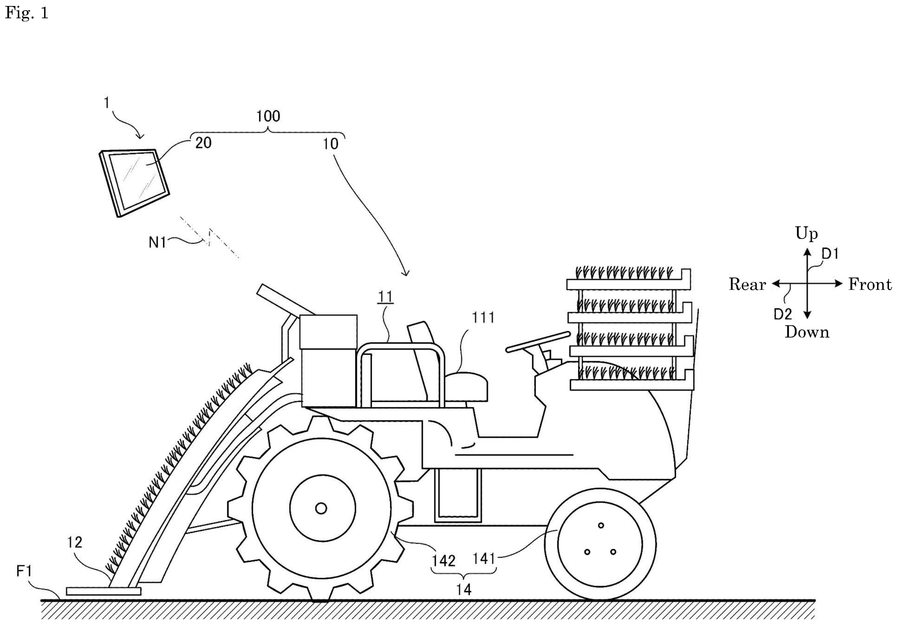

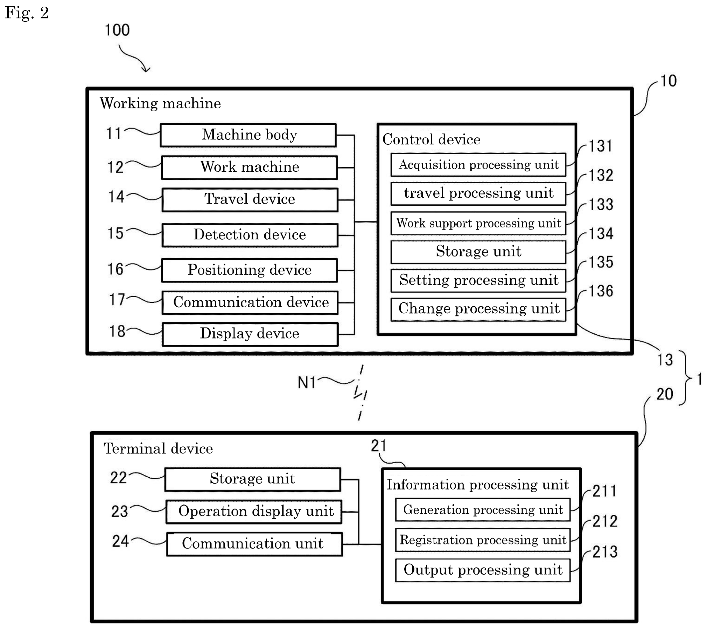

First, the entire configuration of a work system 100 according to the present embodiment will be described with reference to Figs. 1 and 2. A work vehicle control system 1 (hereinafter, also simply referred to as a "control system 1") according to the present embodiment configures the work system 100 together with a machine body 11 of a work vehicle 10. A work machine 12 is attached to the machine body 11. That is, the work system 100 includes the work vehicle control system 1 and the machine body 11 of the work vehicle 10.

In the present embodiment, the control system 1 includes a control device 13 (see Fig. 2) mounted on the machine body 11 of the work vehicle 10 and a terminal device 20. The work vehicle 10 and the terminal device 20 are communicable with each other. The term "communicable" in the present disclosure indicates that information can be exchanged directly, or indirectly via a communication network (network) N1, a repeater, or the like, in an appropriate communication method for wired communication or wireless communication (communication using radio waves or light as a medium). The work vehicle 10 and the terminal device 20 are communicable with each other via the communication network N1 such as the Internet, a local area network (LAN), a wide area network (WAN), a public telephone line, a mobile telephone line network, a packet line network, or a wireless LAN. Communication means between the work vehicle 10 and the terminal device 20 is not limited to the above example, and communication is realized by appropriate communication means. In addition, the fact that the work vehicle 10 and the terminal device 20 are communicable with each other is not an essential configuration in the control system 1.

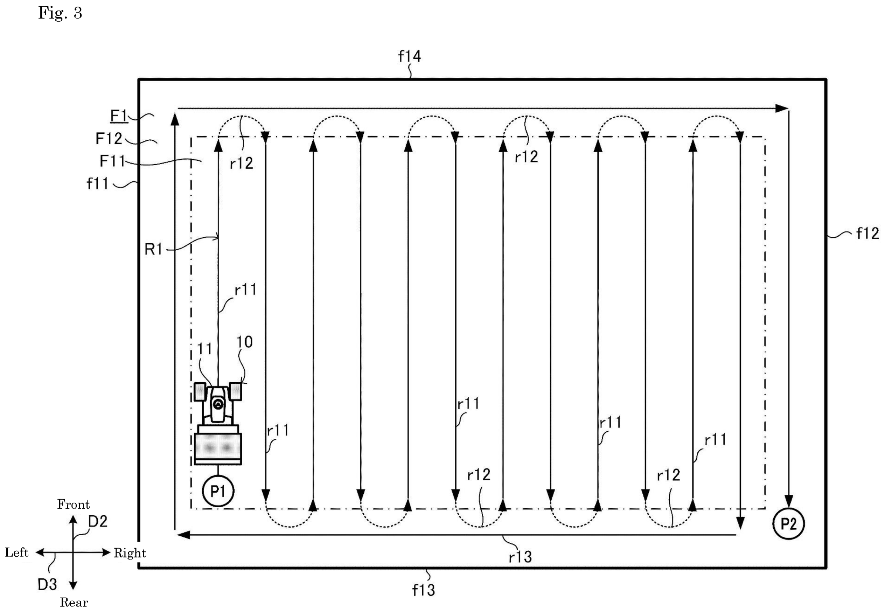

The work vehicle 10 performs some work in a work site F1 with the work machine 12 while traveling in the work site F1 (see Fig. 3). The "work" in the present disclosure is work performed by the work machine 12 on the work site F1, and includes, for example, various types of agricultural work such as planting (rice planting), sowing, fertilizing, agrochemical spreading, leveling, or harvesting, and various types of construction work. In the present embodiment, as an example, the work performed by the work vehicle 10 is planting (rice planting) work of planting seedlings in a paddy field serving as the work site F1.

The work machine 12 performs work in the work site F1 when the machine body 11 of the work vehicle 10 moves in the work site F1. In the present embodiment, as an example, the work machine 12 includes a seedling mount on which a seedling mat is placed, a planting arm that takes a seedling from the seedling mat and plants the seedling, and the like so as to perform seedling planting work. Here, the work machine 12 is attached to the rear side of the machine body 11 (the side opposite to the advancing direction of the machine body 11). That is, the work machine 12 is connected to the rear side of the machine body 11, and performs work while advancing together with the machine body 11 when the machine body 11 advances. In the present embodiment, the work machine 12 is included in the constituents of the work vehicle 10, but the work machine 12 need not be included in the constituents of the work vehicle 10.

The "work vehicle" in the present disclosure indicates a machine that performs various types of work in the work site F1 such as a field, and is, for example, an agricultural machine such as a rice planter, a tractor, a seeder, a spreader, a sprayer, a transplanter, and a harvester. The work vehicle 10 may be, for example, a construction machine. In the present embodiment, unless otherwise specified, a case where the work vehicle 10 is a rice planter will be described as an example. In the work vehicle 10, the machine body 11 travels in the work site F1 such as a field, so that planting work of planting seedlings in the work site F1 can be performed.

In addition, in the present embodiment, as an example, the work vehicle 10 is an automatic machine where a person (operator) can get on and that can be operated through self-driving (autonomous travel and autonomous work). However, the present invention is not limited thereto, and the work vehicle 10 may be an unmanned vehicle operated through self-driving, or may be operated through an operation (including a remote operation) of a person (operator).

The "work site" in the present disclosure is a region where the work vehicle 10 performs various types of work such as planting (rice planting), sowing, fertilizing, agrochemical spreading, leveling, or harvesting while moving, and includes a paddy field, a field, an orchard, a grass field, and the like. For example, in a case where a paddy field or a field that grows crops (agricultural products) such as rice plants, wheat, soybean, or buckwheat is the work site F1, the crops grown in the work site F1 are agricultural products. Furthermore, in a case where plants are grown in a plant field, the plant field is the work site F1, and in a case where trees to be wood are grown in a forest as in forestry, the forest is the work site F1. In this case, a crop grown in the work site F1 is a plant, a tree, or the like. In the present embodiment, unless otherwise specified, a case where the work vehicle 10 is used for planting a seedling in a field (work site F1) and the work site F1 is a paddy field for growing a rice plant will be described as an example. In addition, the work site F1 is not limited to a field, and for example, in a case where the work vehicle 10 is a construction machine, a site where the construction machine performs work is the work site F1.

In addition, the work vehicle 10 can move through self-travel not only in the work site F1 (here, the field) but also on a road such as a route outside a field outside the work site F1. The work vehicle 10 can self-travel (move) along a target route (including a route outside the field) set in advance in the work site F1 and outside the work site F1 on the basis of position information of a current position of the work vehicle 10 measured by a positioning device 16 (see Fig. 2). The route outside the field is, for example, an inter-field connection road that connects a plurality of work sites F1 (fields). The inter-field connection road is an agricultural road, a forest road, a public road, a private road, an automobile road, or the like, and may be a road dedicated to the work vehicle 10 or a road through which general vehicles (passenger cars and the like) can pass.

### [2] Configuration of work vehicle

Next, a configuration of the work vehicle 10 according to the present embodiment will be described in detail with reference to Figs. 1 and 2.

In the present embodiment, for convenience of description, the vertical direction in a state in which the work vehicle 10 can be used is defined as an up-down direction D1. A front-rear direction D2 and a left-right direction D3 (see Fig. 3) are defined with reference to a direction viewed from a person (operator) riding on (a driving portion 111 of) the machine body 11 of the work vehicle 10. The left side in the left-right direction D3 is a left side of a case where the machine body 11 travels (advances) forward, and the right side in the left-right direction D3 is a right side of a case where the machine body 11 travels (advances) forward. However, these directions are not intended to limit the use direction (a direction at the time of use) of the work vehicle 10.

As shown in Fig. 2, the work vehicle 10 includes the control device 13, a travel device 14, a detection device 15, the positioning device 16, a communication device 17, a display device 18, and the like in addition to the machine body 11 and the work machine 12. The control device 13, the travel device 14, the detection device 15, the positioning device 16, the communication device 17, and the display device 18 are all mounted on the machine body 11.

The machine body 11 includes a driving portion 111 (see Fig. 1) where a person (operator) can get on. A steering device, a transmission device, an operating device, and the like are disposed in the driving portion 111. A steering device, a transmission device, an operating device, and the like are operation units operated by an operator or the control device 13. Therefore, the work vehicle 10 can perform both manual driving based on manual operation of the operator and self-driving performed by the control device 13. In addition, as described above, the work machine 12 is connected to the rear side of the machine body 11.

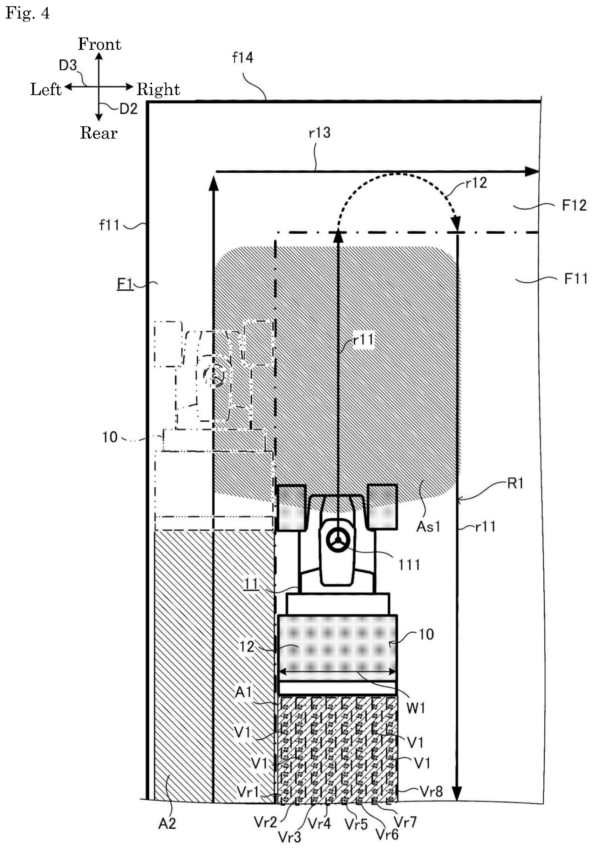

In the present embodiment, the work machine 12 is connected to the rear side of the machine body 11, and can perform planting work on the field that is the work site F1 when the machine body 11 moves forward. Here, the work machine 12 supports planting of a plurality of rows (for example, six, seven, or eight rows), and has a work width W1 (see Fig. 4) corresponding to the supported number of rows in the width direction (left-right direction D3). That is, for example, in the case of the work machine 12 supporting planting of seven rows, it is possible to simultaneously receive seedlings of seven rows in the width direction (left-right direction D3). In the present embodiment, as an example, it is assumed that the work vehicle 10 is an eight-row rice planter including the work machine 12 supporting eight rows.

As described above, the work vehicle 10 according to the present embodiment can perform work on a plurality of work lines arranged in a direction (left-right direction D3) intersecting the advancing direction (front-rear direction D2) while traveling in the work site F1. In the present embodiment, as an example, since the work vehicle 10 is an eight-row rice planter, a plurality of work lines Vr1 to Vr8 (see Fig. 4) is respectively eight seedling lines in which seedling lines including a plurality of seedlings V1 (see Fig. 4) arranged in the advancing direction (front-rear direction D2) are arranged at predetermined intervals in the left-right direction D3. That is, the work vehicle 10 can perform the planting work in parallel (simultaneously) on the eight work lines Vr1 to Vr8. Therefore, the work vehicle 10 can simultaneously perform planting on a maximum of eight work lines Vr1 to Vr8 while advancing.

As shown in Fig. 1, the travel device 14 includes front wheels 141, rear wheels 142, a power source (such as an engine and/or a motor), and the like. For example, a pair of left and right front wheels 141 and a pair of left and right rear wheels 142 are provided. The travel device 14 can cause the machine body 11 to travel (move) by driving at least the rear wheels 142 (the rear wheels 142 and the front wheels 141 in the present embodiment) with power generated by the power source. Here, the front wheels 141 function as turning wheels and enable turning in the left-right direction D3. As a result, the machine body 11 can travel to move in the front-rear direction D2 and the left-right direction D3 in the work site F1.

At least during autonomous traveling, the travel device 14 is operated by the control device 13 operating, for example, the steering device, the transmission device, and the operating device as described above. For example, in the travel device 14, an angle of the front wheels 141 is changed by a hydraulic or electric power steering mechanism or the like by the control device 13 operating the steering device, and the advancing direction of the machine body 11 is changed. In addition, when the control device 13 operates the transmission device, a gear of the transmission is switched to a forward gear, a back gear, or the like, and the travel aspect of the machine body 11 is switched to forward or backward. In addition, the control device 13 operates an accelerator or a brake of the operating device to control a rotation speed of the power source, and brakes the front wheels 141 and the rear wheels 142 by driving the brake with an electric actuator or the like.

The detection device 15 detects a detection target object (obstacle) in a detection area As1 (see Fig. 4). In the present embodiment, as an example, detection target objects include humans and other animals, moving objects (including other work vehicles) such as vehicles, structures such as walls and columns, plants, steps, or other obstacles. The detection device 15 may include various sensors such as a radar, a sonar sensor, light detection and ranging (LiDAR), a human sensor, or a camera (image sensor). Here, the detection device 15 is preferably a three-dimensional sensor capable of measuring a distance to and an azimuth of a detection target object according to a time of flight (TOF) method of measuring a distance to a distance measurement point on the basis of a reciprocating time until light or sound reaches the distance measurement point and returns, a stereo camera method, or the like. Thus, the detection device 15 can output measurement information including the position of the detection target object in a plan view to the control device 13. In the present embodiment, as an example, it is assumed that the detection device 15 is a radar using millimeter waves (millimeter wave radar) or a sonar sensor using ultrasonic waves (or sound waves).

The positioning device 16 obtains the current position (latitude, longitude, altitude, and the like) of the machine body 11. Specifically, the positioning device 16 calculates the current position (latitude and longitude) of the machine body 11 by using a satellite positioning system such as a global navigation satellite system (GNSS). That is, the positioning device 16 includes a positioning antenna that receives a positioning signal from a satellite, and calculates the current position on the basis of the positioning signal. The positioning device 16 includes an inertial sensor, and can also detect an attitude such as the current azimuth of the machine body 11.

In addition, the positioning device 16 may detect the current position with relatively high accuracy, such as real time kinematic (RTK) positioning of calculating the current position of the work vehicle 10 by using correction information corresponding to a base station (reference station) close to the work vehicle 10. The current position of the machine body 11 may be the same position as the positioning position (the position of the positioning antenna), or may be a position shifted from the positioning position, such as the center position of the machine body 11 in a plan view. As the positioning device 16, for example, a mobile phone terminal, a smartphone, or a tablet terminal may be substituted.

The communication device 17 is a communication interface for connecting the work vehicle 10 (the control device 13, the positioning device 16, and the like) to an external device in a wired or wireless manner and executing data communication with the external device according to a predetermined communication protocol. In the present embodiment, the communication device 17 can communicate with at least the terminal device 20, which is an external device, via the communication network N1. The communication device 17 can be connected to the communication network N1 at least wirelessly, and can communicate with the terminal device 20 at any time even though the work vehicle 10 moves (travels) in the work site F1. As the communication device 17, for example, a mobile phone terminal, a smartphone, or a tablet terminal may be substituted.

The display device 18 is a user interface for presenting information to a user (operator), such as a liquid crystal display or an organic EL display that displays various types of information. The display device 18 is disposed in the driving portion 111, for example, and presents various types of information to the operator by displaying a screen including the various types of information. The "screen" in the present disclosure indicates a video (image) displayed on the display device 18 or the like, and includes a picture, a figure, a photograph, a text, a moving image, and the like. The screen displayed on the display device 18 includes not only a still image but also a video (moving image) that changes from moment to moment. Furthermore, the display device 18 has a function of outputting sound (including voice) to the user (operator) and a function of receiving an operation of the user (operator).

The control device 13 mainly includes a computer system including one or more processors such as a central processing unit (CPU) and one or more memories such as a read only memory (ROM) and a random access memory (RAM), and executes various types of processing (information processing). In the present embodiment, since the control device 13 mainly includes the computer system including one or more processors, the control device 13 is realized by the one or more processors executing a work vehicle control program. In the present embodiment, the control device 13 is an integrated controller that controls the entire work vehicle 10, and includes, for example, an electronic control unit (ECU). However, the control device 13 may be provided separately from an integrated controller.

The control device 13 is configured in such a manner as to be communicable with a device provided in each part of the machine body 11. That is, the work machine 12, the travel device 14, the detection device 15, the positioning device 16, the communication device 17, the display device 18, and the like are electrically connected to the control device 13. As a result, the control device 13 can control the work machine 12, the travel device 14, and the like, and acquire detection results from the detection device 15 and the positioning device 16. Here, the control device 13 may directly exchange various types of information (data) with each device or indirectly exchange various types of information (data) via a repeater or the like.

In the present embodiment, as shown in Fig. 2, the control device 13 includes an acquisition processing unit 131, a travel processing unit 132, a work support processing unit 133, a storage unit 134, a setting processing unit 135, and a change processing unit 136.

The acquisition processing unit 131 executes acquisition processing of acquiring work site information regarding the work site F1. Here, the work site information includes outline information based on an outer shape (outline) of the work site F1. That is, the acquisition processing unit 131 acquires outline information based on the outline of the work site F1.

The travel processing unit 132 executes travel processing of controlling the travel device 14. As an example, the travel processing unit 132 controls the travel device 14 on the basis of the current position of the work vehicle 10 calculated by the positioning device 16 and a target route set in advance, which causes the work vehicle 10 to self-travel. Furthermore, the travel processing unit 132 controls the work machine 12 on the basis of the current position of the work vehicle 10 calculated by the positioning device 16 and a target route set in advance, which causes the work vehicle 10 to perform work (planting work in the present embodiment) at an appropriate position on the target route.

Specifically, when acquiring a travel start instruction from the terminal device 20, the travel processing unit 132 starts self-travel of the work vehicle 10. For example, when the operator operates a start button on the operation screen of the terminal device 20, the terminal device 20 outputs the travel start instruction to the work vehicle 10. As a result, for example, the work vehicle 10 starts self-travel along a target route R1 (see Fig. 3) in the work site F1, and performs work (planting work in the present embodiment) with the work machine 12.

The target route R1 on which the work vehicle 10 self-travels is generated in, for example, the terminal device 20. That is, the work vehicle 10 acquires route data corresponding to the target route R1 from the terminal device 20, and self-travels along the target route R1.

In addition, when acquiring a travel stop instruction from the terminal device 20, the travel processing unit 132 stops the self-travel of the work vehicle 10. For example, when the operator operates a stop button on the operation screen of the terminal device 20, the terminal device 20 outputs the travel stop instruction to the work vehicle 10.

The term "self-travel" in the present disclosure includes "autonomous travel" in which the work vehicle 10 autonomously travels without an operation of an operator and "semi-self-travel" in which only steering is automated, such as straight assist.

The "autonomous travel" is, for example, a travel aspect in which the control of a vehicle speed and the like is automatically performed in addition to the automatic steering of the turning wheels (front wheels 141) such that the work vehicle 10 travels along the target route R1. The "straight assist" is, for example, a travel aspect in which only the automatic steering of the turning wheels (front wheels 141) is performed such that the work vehicle 10 travels along a straight route parallel to a straight line (reference line) serving as a reference, and a vehicle speed and the like are controlled through an operation of an operator.

As another example, the work vehicle 10 may travel through manual steering of an operator. For example, the operator gets on the work vehicle 10 and causes the work vehicle 10 to travel through manual steering while checking the target route R1.

The work support processing unit 133 executes work support processing of supporting work (planting work in the present embodiment) of the work machine 12. The work support processing includes, for example, processing of supporting the operation of the work machine 12 by the operator by performing presentation (display, sound output, or the like) related to the operation of the work machine 12 on a user interface such as the display device 18, and processing of directly controlling the work machine 12. In the present embodiment, basically, the work support processing unit 133 executes the former processing (that is, processing of supporting the operation of the work machine 12 by the operator) as the work support processing.

The storage unit 134 is a nonvolatile memory or the like that stores various types of data such as a work vehicle control program and target route information regarding the target route R1. That is, the travel processing unit 132 can cause the travel device 14 to self-travel along the target route R1 on the basis of the target route information stored in the storage unit 134.

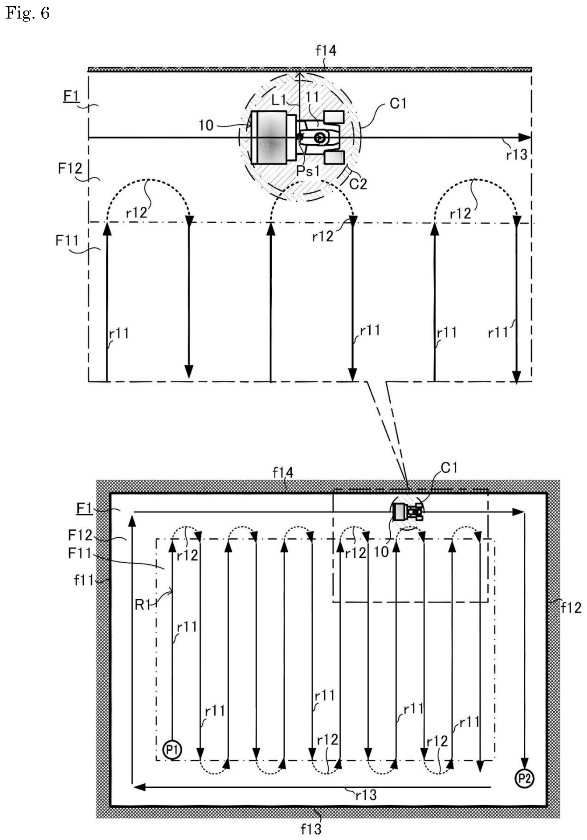

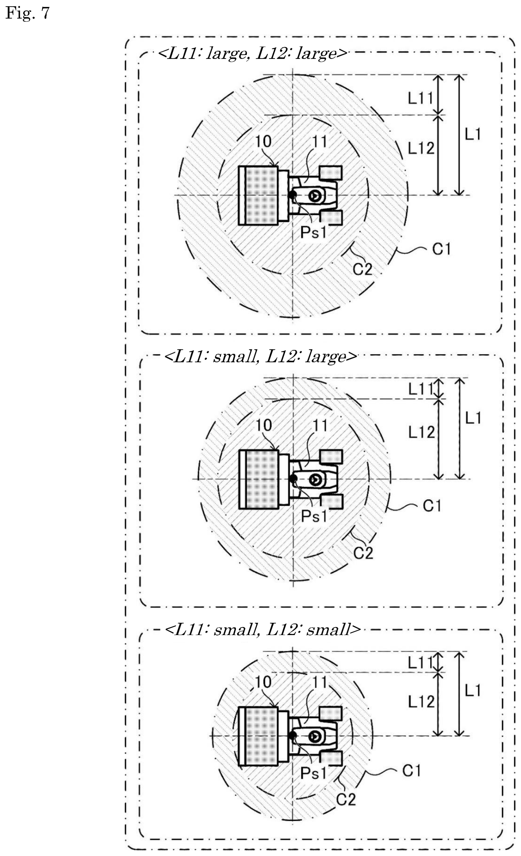

The setting processing unit 135 executes setting processing of setting an allowable limit distance L1 (see Fig. 6). The allowable limit distance L1 is defined using a margin value L11 (see Fig. 7) based on the work vehicle 10, and is a limit distance that allows the work vehicle 10 to approach the outline of the work site F1. The allowable limit distance L1 set by the setting processing unit 135 is a distance that is set based on the work vehicle 10 and determines how far the approach of the work vehicle 10 to the outline of the work site F1 is allowed. In short, while traveling in the work site F1, the work vehicle 10 can approach the outline up to the position equal to or farther than the allowable limit distance L1 from the outline, but cannot approach the outline any more, that is, up to the position less than the allowable limit distance L1 from the outline.

The change processing unit 136 executes change processing of changing the margin value L11. That is, in the present embodiment, the margin value L11 used to define the allowable limit distance L1 is not a constant value, and can be changed by the change processing unit 136. As the margin value L11 increases, the allowable limit distance L1 also increases, and as the margin value L11 decreases, the allowable limit distance L1 also decreases. Therefore, for example, by decreasing the margin value L11 to decrease the allowable limit distance L1, the work vehicle 10 can approach closer to the outline of the work site F1, and can travel along a route (target route R1) further closer to the outline of the work site F1.

Furthermore, in a case where the detection device 15 detects an obstacle as a detection target object at least during self-traveling of the work vehicle 10, the control device 13 executes output of an alarm (including notification by sound and/or light), avoidance processing (including detour, deceleration, stop, and the like) of the obstacle by controlling the travel device 14, and the like. Furthermore, the control device 13 may output the position information of the obstacle, the execution history of the avoidance processing, and the like to the terminal device 20 such that the position information of the obstacle, the execution history of the avoidance processing, and the like are displayed on the terminal device 20.

In addition, the work vehicle 10 further includes a battery, a fuel tank, various sensors, and the like in addition to the above-described configuration. The battery supplies power for operation to each unit of the work vehicle 10 such as the control device 13, for example. In particular, electronic devices such as the control device 13, the detection device 15, the positioning device 16, the communication device 17, and the display device 18 are operable by being operated by the supply of power from the battery even while the power source (engine) of the travel device 14 is stopped.

### [3] Configuration of terminal device

Next, a configuration of the terminal device 20 according to the present embodiment will be described in detail with reference to Figs. 1 and 2.

In the present embodiment, the terminal device 20 can communicate with the work vehicle 10 as described above, and configures the control system 1 together with the control device 13 of the work vehicle 10. That is, the constituents of the control system 1 are provided to be distributed to at least the work vehicle 10 and the terminal device 20. However, the present invention is not limited to this configuration, and for example, the function of the control device 13 may be provided in the terminal device 20. In this case, the constituents of the control system 1 are realized only by the terminal device 20. Conversely, for example, the function of the terminal device 20 may be provided in the control device 13, and in this case, the constituents of the control system 1 are realized only by the control device 13.

In the present embodiment, as an example, the terminal device 20 is configured as a general-purpose terminal such as a tablet terminal, a smartphone, or a laptop computer. As shown in Fig. 2, the terminal device 20 includes an information processing unit 21, a storage unit 22, an operation display unit 23, and a communication unit 24. Furthermore, the terminal device 20 further includes a sound output unit that outputs sound (including voice) to a user (operator), a battery, and the like.

The information processing unit 21 mainly includes a computer system including one or more processors such as a CPU and one or more memories such as a ROM and a RAM, and executes various types of processing (information processing). In the present embodiment, since the information processing unit 21 mainly includes a computer system including one or more processors, the information processing unit 21 is realized by the one or more processors executing a work vehicle control program. That is, the one or more processors of the control device 13 included in the control system 1 and the one or more processors of the information processing unit 21 execute the work vehicle control program, such that the control device 13 and the terminal device 20 cooperate to implement the control system 1.

The information processing unit 21 is communicable with each of the units (the storage unit 22, the operation display unit 23, and the communication unit 24) of the terminal device 20. That is, the storage unit 22, the operation display unit 23, the communication unit 24, and the like are electrically connected to the information processing unit 21. Therefore, the information processing unit 21 can read/write information from/to the storage unit 22, control the display of the operation display unit 23, and acquire an operation input to the operation display unit 23. Here, the information processing unit 21 may exchange various types of information (data) directly with each unit or indirectly via a repeater or the like.

Such a terminal device 20 is a user interface for receiving an operation input of a user (operator) and outputting various types of information to the user. For example, the terminal device 20 outputs an electric signal corresponding to a user's operation on the operation display unit 23 to receive various operations of the user. Furthermore, the terminal device 20 outputs various types of information to the user by displaying various screens on the operation display unit 23.

The storage unit 22 is a nonvolatile memory or the like that stores various types of data such as the work vehicle control program and target route information regarding the target route R1. The storage unit 22 can store various types of data such as work machine information, work vehicle information, field information, and work information. The work machine information is information regarding the work machine 12 attached to the machine body 11, and includes, for example, information such as a type, identification information, a model name, a model, and a size (dimension) of the work machine 12. The work vehicle information is information regarding the machine body 11 (vehicle body) of the work vehicle 10, and includes, for example, information such as a type (for example, a half-crawler type or a wheel type), identification information, a model name, a model, and a size (dimension) of the machine body 11. The field information is information regarding the field as the work site F1, and includes information such as identification information, and a field name, a position, a shape, a size, a work start position (travel start position) at which work is started, a work end position (travel end position) at which work is ended, and a work direction of the field. The work information is information regarding work performed by the work vehicle 10, and includes, for example, information such as a type of work and how to specifically perform the work. Furthermore, the work information may also include the presence or absence of cooperative work by the work vehicle 10, a width of a headland, a width of a non-cultivated land, and the like.

These pieces of information (the target route information, the work machine information, the work vehicle information, the field information, the work information, and the like) stored in the storage unit 22 are set (registered) through operation input of the user (operator) on the operation display unit 23 or by being acquired from the work vehicle 10. For example, the type of the work machine 12 in the work machine information may be designated by the user operating the operation display unit 23, or the type of the work machine 12 attached to the machine body 11 may be automatically determined by the work vehicle 10 and transmitted to the terminal device 20. The terminal device 20 may acquire these pieces of information from an external device (for example, a server, an external storage medium, or another terminal device) other than the work vehicle 10.

The operation display unit 23 is a user interface including a display unit such as a liquid crystal display or an organic EL display that displays various types of information, and an operation unit such as a touch panel, a mouse, a keyboard, a mechanical switch, or an encoder that receives an operation. As an example, the operator can perform an operation of setting (registering) various types of information by operating the operation unit of the operation display unit 23 on an operation screen displayed on the display unit of the operation display unit 23. For example, the operator can set self-travel information (including target route information) regarding self-travel of the work vehicle 10.

In addition, the operation display unit 23 displays a work progress status in the work site F1 and an operation status of the work vehicle 10 including the target route R1 of the work vehicle 10, an (actual) movement trajectory, the current position, a movement speed, and the like, which enables the operator to perform short-distance monitoring and remote monitoring of the work vehicle 10 during self-driving. The short-distance monitoring means, for example, monitoring in a range visible to the operator, and the remote monitoring means, for example, monitoring by a video around the work vehicle 10 displayed on the terminal device 20. According to the remote monitoring, a plurality of work vehicles 10 can be monitored by one terminal device 20. However, these definitions are merely examples, and other definitions may be made. Here, the operation status of the work vehicle 10 includes a detection result of a detection target object in the detection device 15, and the like. The operation display unit 23 can receive a travel start instruction, a travel stop instruction, or the like for the work vehicle 10 from the operator. The terminal device 20 can remotely control the work vehicle 10 by transmitting the travel start instruction, the travel stop instruction, or the like to the work vehicle 10. Therefore, the operator can remotely operate the work vehicle 10.

The communication unit 24 is a communication interface for connecting the terminal device 20 to the work vehicle 10 in a wired or wireless manner and executing data communication with the work vehicle 10 according to a predetermined communication protocol. In the present embodiment, the communication unit 24 can communicate with at least (the communication device 17 of) the work vehicle 10 via the communication network N1. Furthermore, since the communication unit 24 is connectable to the communication network N1 at least wirelessly, the communication unit 24 can communicate with the work vehicle 10 at any time even at a place sufficiently away from the work vehicle 10.

By the way, in the present embodiment, as shown in Fig. 2, the information processing unit 21 includes a generation processing unit 211, a registration processing unit 212, and an output processing unit 213. In the present embodiment, as an example, since the information processing unit 21 mainly includes a computer system including one or more processors, the plurality of functional units (the generation processing unit 211 and the like) is realized by the one or more processors executing the work vehicle control program. The plurality of functional units included in the information processing unit 21 may be provided to be distributed to a plurality of housings, or may be provided in one housing.

The generation processing unit 211 executes route generation processing of generating a route (target route R1) on which the work vehicle 10 travels (self-travels) in the work site F1. Here, the generation processing unit 211 generates the target route R1 on the basis of generation data including the work machine information, the work vehicle information, the field information, the work information, and the like stored in the storage unit 22. That is, the target route R1 is generated, by the generation processing unit 211, on the basis of, for example, the work machine information, the work vehicle information, the field information, the work information, and the like set (registered) through operation input or the like of the user (operator) on the operation display unit 23.

Specifically, the generation processing unit 211 generates the target route R1 in the work site F1 on the basis of a travel start position P1 (see Fig. 3) and a travel end position P2 (see Fig. 3) included in the field information. For example, the generation processing unit 211 generates the target route R1 on which the machine body 11 of the work vehicle 10 moves from the travel start position P1 to the travel end position P2 in the work site F1 on the basis of the generation data.

In the present embodiment, the field information included in the generation data includes outline information based on the outline of the work site F1. Since the work vehicle 10 travels in the work site F1 along the target route R1, the generation processing unit 211 basically generates a route (target route R1) on which the work vehicle 10 travels without protruding from the outline of the work site F1 specified by the outline information based on the generation data.

The registration processing unit 212 executes registration processing of registering the work machine information, the work vehicle information, the field information, the work information, and the like. That is, the work machine information, the work vehicle information, the field information, the work information, and the like used for generating the target route R1 are registered (set) by the registration processing unit 212 through, for example, operation input of the user (operator) on the operation display unit 23.

The output processing unit 213 executes, for example, output processing of outputting route data of the target route R1 to the work vehicle 10. That is, the route data regarding the target route R1 generated by the generation processing unit 211 is output from the output processing unit 213 to the communication unit 24, for example, and is transmitted from the communication unit 24 to the work vehicle 10.

For example, when starting work, the operator selects a field (work site F1), selects work, checks the target route R1, and the like, and gives a work start instruction. When the operator gives the work start instruction, the output processing unit 213 transmits (outputs) the route data of the target route R1 generated by the generation processing unit 211 to the work vehicle 10. Upon receiving the route data generated by the terminal device 20, the work vehicle 10 stores the route data in the storage unit 134. Then, the work vehicle 10 performs self-driving (autonomous travel and autonomous work) on the basis of the current position of the work vehicle 10 calculated by the positioning device 16 and the target route R1 specified by the route data.

Furthermore, the output processing unit 213 can also output the generated target route R1 to the operation display unit 23 such that the target route R1 is displayed on the operation display unit 23. An aspect of the output of the output processing unit 213 is not limited to the transmission to or display on the work vehicle 10 as described above, and may be, for example, transmission to another device (a user terminal or the like), printing (print-out), writing to a non-transitory recording medium, or sound output.

The terminal device 20 may be able to access a website (agricultural support site) of an agricultural support service provided by a server via the communication network N1. In this case, the terminal device 20 can function as an operation terminal of the server by the information processing unit 21 executing a browser program. The server includes the above-described processing units and executes respective pieces of processing.

### [4] Control method for work vehicle

Hereinafter, with reference to Figs. 3 to 10, an example of a control method for the work vehicle 10 (hereinafter, simply referred to as a "control method") mainly executed by the control system 1 (the control device 13 and the terminal device 20) will be described.

Since the control method according to the present embodiment is executed by the control system 1 mainly including a computer system, in other words, the control method is implemented by a work vehicle control program (hereinafter, simply referred to as a "control program"). That is, the control program according to the present embodiment is a computer program for causing one or more processors to execute each piece of processing related to the control method.

Here, in a case where a specific start operation, which is set in advance, for executing the control program is performed, the control system 1 executes the following various types of processing related to the control method. The start operation is, for example, a startup operation of an application program (work vehicle control program) in the terminal device 20. On the other hand, in a case where a specific end operation set in advance is performed, the control system 1 ends the following various types of processing related to the control method. The end operation is, for example, an end operation of the application program (work vehicle control program) in the terminal device 20.

In addition, in the following description, as shown in Fig. 3, it is assumed that the work site F1 is a quadrangular field in a plan view, and of the outline (outer peripheral edge) of the work site F1, one short side is a "first outline f11", the other short side is a "second outline f12", one long side is a "third outline f13", and the other long side is a "fourth outline f14". In the work site F1, the travel start position P1 is disposed near the corner between the first outline f11 and the third outline f13, and the travel end position P2 is disposed near the corner between the second outline f12 and the third outline f13.

### [4.1] Basic operation

First, a basic operation in a case where the control system 1 according to the present embodiment causes the work vehicle 10 to self-travel along the target route R1 in the work site F1 including a certain field will be described with reference to Figs. 3 and 4. Fig. 4 is a schematic enlarged view of the vicinity of the corner between the first outline f11 and the fourth outline f14 in Fig. 3.

In the examples of Figs. 3 and 4, the target route R1 includes a work route r11, a connection route r12, and an outer peripheral route r13. The work route r11 and the outer peripheral route r13 are routes on which the work vehicle 10 travels (moves) while performing work with the work machine 12. The connection route r12 connects the plurality of work routes r11 and is a route (non-work route) for the work vehicle 10 to perform turning travel for changing the advancing direction, and is a route on which the work vehicle 10 travels (moves) without performing work with the work machine 12.

In the drawings such as Fig. 3 showing the target route R1, routes on which the work vehicle 10 performs work (the work routes r11 and the outer peripheral routes r13) are indicated by solid lines, and routes on which the work vehicle 10 does not perform work (connection routes r12) are indicated by dotted lines. In the drawings such as Fig. 3 showing the target route R1, the target route R1 (and the work vehicle 10) generated for the work site F1 in a plan view is schematically shown. In Figs. 3 and 4, the front-rear direction D2 and the left-right direction D3 are directions based on the orientation of the machine body 11 of the work vehicle 10 shown in Figs. 3 and 4.

More specifically, as shown in Fig. 3, the target route R1 includes the plurality of work routes r11 extending between a pair of long sides (the third outline f13 and the fourth outline f14) of the work site F1. That is, in the target route R1 shown in Fig. 3, the work route r11 extending upward in the drawing from the travel start position P1 set at the lower left corner in the drawing is disposed, and the plurality of (parallel) work routes r11 along the work route r11 is disposed at regular intervals on the right in the drawing. The plurality of work routes r11 is disposed such that the work route r11 from one long side (third outline f13) of the work site F1 toward the other long side (fourth outline f14) and the work route r11 opposite thereto are alternately arranged.

Here, each of the plurality of work routes r11 is a linear route on which the work vehicle 10 moves forward while performing work with the work machine 12. The interval between the adjacent work routes r11 is set on the basis of the width dimension (work width W1) of the work machine 12 in the left-right direction D3, and the work vehicle 10 travels along the plurality of work routes r11, so that the planting work is performed on substantially the entire region of the work site F1 (excluding the headland region serving as the outer peripheral portion). The pair of adjacent work routes r11 are connected to each other via the connection route r12 that connects the terminal end of one work route r11 on the first outline f11 side and the starting end of the other work route r11 on the second outline f12 side.

In addition, the outer peripheral route r13 is a route that continues to the terminal end of the last (second outline f12 side) work route r11 among the plurality of work routes r11 and circulates around the outer peripheral portion of the work site F1 along the outline (first to fourth outlines f11 to f14) of the work site F1. In the example in Fig. 3, the outer peripheral route r13 extends from the lower right corner in the drawing to the lower left corner in the drawing, extends from the lower left corner in the drawing to the upper left corner in the drawing, extends from the upper left corner in the drawing to the upper right corner in the drawing, and extends from the upper right corner in the drawing to the travel end position P2 at the lower right corner in the drawing, thereby circulating on the headland region serving as the outer peripheral portion of the work site F1 one time.

According to such a target route R1, the work vehicle 10 performs the planting work while traveling to reciprocate in parallel on the work route r11 from the travel start position P1 in an inner region F11 (the inner side of the one-dot chain line in Fig. 3) excluding an outer peripheral region F12 serving as the outer peripheral portion in the work site F1. Thereafter, the work vehicle 10 performs the planting work while traveling circumferentially along the outer peripheral route r13 clockwise toward the travel end position P2 in the outer peripheral region F12. However, when the work vehicle 10 travels along the outer peripheral route r13, it is preferable that the operator perform self-travel of the work vehicle 10 in the "manned state" in which the operator gets on the machine body 11. Thus, the work vehicle 10 can perform the planting work on substantially the entire region of the work site F1 including the outer peripheral region F12.

In short, since the work vehicle 10 performs work (planting work) with the work machine 12 when traveling along the work route r11, as shown in Fig. 4, a plurality of seedlings V1 is planted in a passage region A1 through which (the work machine 12 of) the work vehicle 10 has passed in the inner region F11. Here, in the passage region A1, a plurality of (eight) work lines Vr1 to Vr8 (seedling lines) arranged in the left-right direction D3 orthogonal to the advancing direction of the work vehicle 10 is formed.

Similarly, since the work vehicle 10 performs work (planting work) with the work machine 12 also when traveling along the outer peripheral route r13, a plurality of seedlings V1 is also planted in a passage region A2 through which the work vehicle 10 (indicated by an imaginary line (two-dot chain line) in Fig. 4) has passed in the outer peripheral region F12. Although not shown in Fig. 4, a plurality of (eight) work lines Vr1 to Vr8 (seedling lines) arranged in the left-right direction D3 orthogonal to the advancing direction of the work vehicle 10 is formed in the passage region A2.

The target route R1 is not limited to the route shown in Fig. 3 and is set as appropriate. In addition, in Fig. 3, the work vehicle 10 first travels in the inner region F11 and then travels in the outer peripheral region F 12, but the travel order of the work vehicle 10 is not limited thereto. For example, the work vehicle 10 may first travel in the outer peripheral region F12 and then travel in the inner region F11.

In addition, in the example in Fig. 3, the connection route r12 set in the outer peripheral region F12 includes the turning route for the right turn in gentle turning, but a turning aspect for changing the azimuth of the work vehicle 10 is not limited to the "gentle turning". The connection route r12 may include, for example, a turning aspect of causing the machine body 11 to turn while switching between forward and backward in order to enable turning of the machine body 11 within a limited space, such as a so-called "fishtail turn". Similarly, an appropriate turning aspect such as "gentle turning" or "fishtail turn" can be applied to a turning aspect of the work vehicle 10 when traveling along the outer peripheral route r13.

In order to realize the self-travel of the work vehicle 10 as described above, it is necessary to recognize and register the shape of the work site F1 in advance. As an example, the operator gets on the work vehicle 10 and drives to make one round along the outer periphery of the work site F1 that is a registration target (teaching travel), and the terminal device 20 acquires position information during traveling from the work vehicle 10, recognizes the position and the shape of the work site F1 on the basis of the position information, and registers the work site F1. The outer peripheral route r13 is generated on the route on which the work vehicle 10 travels in such teaching travel. Registering the work site F1 on the basis of such teaching travel or the past record information of the travel route enables generating the target route R1 in a state of avoiding, from the beginning, an obstacle such as a culvert that is difficult to detect only with the detection device 15.

Furthermore, a plurality of work routes r11 may be generated while leaving a width for a plurality of strokes in the outer peripheral region F12 of the work site F1, and an outer peripheral route r13 for a plurality of strokes may be generated along the outer periphery (outline) of the work site F1. In this case, after working and traveling along the plurality of work routes r11, the work vehicle 10 sequentially travels along the outer peripheral route r13 for a plurality of rounds from the inside to the outside. At that time, it is preferable that the work vehicle 10 self-travel along the inner outer peripheral route r13 in an unmanned state, and self-travel along the outermost outer peripheral route r13 in a manned state.

### [4.2] Allowable limit distance

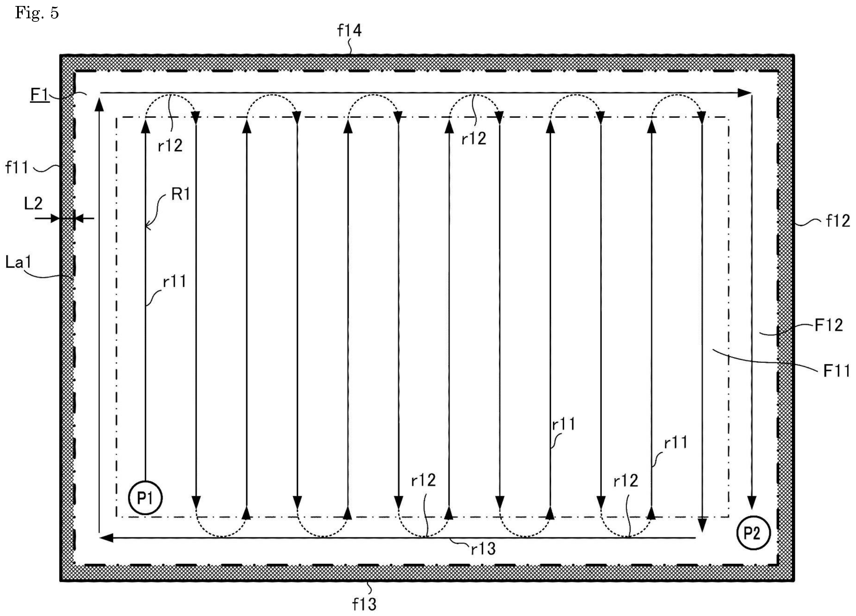

Next, processing (setting processing and the like) related to the allowable limit distance L1 will be described with reference to Figs. 5 to 9.

The control system 1 according to the present embodiment basically generates the target route R1 for causing the work vehicle 10 to travel (automatically travel) without protruding from the outline of the work site F1. Therefore, the work vehicle 10 performs work on the work site F1 while traveling in the work site F1 along the target route R1 such that the machine body 11 does not protrude to the outside of the work site F1 (that is, the outside of the outline).

In this case, for example, as shown in Fig. 5, it is possible to generate the target route R1 based on at least a boundary line La1 so that the machine body 11 of the work vehicle 10 does not protrude to the outside from the boundary line La1. That is, in consideration of a detection error or the like in the positioning device 16, in order to avoid the work vehicle 10 from coming into contact with a ridge or the like outside the work site F1, a safety margin is secured in the outer peripheral portion of the work site F1, and the target route R1 is generated such that the work vehicle 10 travels further inside the work site F1. In other words, when the work vehicle 10 travels in the work site F1, the target route R1 is generated such that the work vehicle 10 can travel without protruding from the boundary line La1 set on the inner side by a constant value L2 from the outline, instead of moving the work vehicle 10 to the closest to the outline (the first to fourth outlines f11 to f14) of the work site F1.

As shown in Fig. 5, in a case where the boundary line La1 is located on the inner side of the outline, a region (shaded region in Fig. 5) between the boundary line La1 and the outline is the safety margin band. The target route R1 is generated based on the boundary line La1 such that the work vehicle 10 does not protrude to the outside (outline side) from the boundary line La1 that is the inner peripheral edge of the safety margin band. Therefore, even if a detection error or the like occurs in the positioning device 16, the work vehicle 10 only protrudes into the safety margin band, and hardly protrudes from the outline (the first to fourth outlines f11 to f14).

In a case where the width of the safety margin band is the constant value L2, the position of the boundary line La1 set on the inner side of the outline is constant. For example, even in a situation where there is no risk of contact even if the work vehicle 10 is further moved to the outline (ridge) of the work site F1, such as a case where the work vehicle 10 is traveling at a low speed, it is difficult to cause the work vehicle 10 to travel along such a route.

Therefore, in the control method according to the present embodiment, it is possible to cause the work vehicle 10 to travel along a more appropriate route by the configuration described below.

That is, the control method for the work vehicle 10 according to the present embodiment is a control method for the work vehicle 10 capable of working while traveling in the work site F1. This control method includes setting the allowable limit distance L1 and changing the margin value L11. The allowable limit distance L1 is defined using the margin value L11 based on the work vehicle 10, and is a limit distance that allows the work vehicle 10 to approach the outline of the work site F1.

In short, in the control method according to the present embodiment, first, the allowable limit distance L1, which is a limit that allows the work vehicle 10 to approach the outline of the work site F1, is set based on the work vehicle 10 instead of the outline of the work site F1. Therefore, while traveling in the work site F1, the work vehicle 10 can approach the outline up to the position equal to or farther than the allowable limit distance L1 from the outline, but cannot approach the outline any more, that is, up to the position less than the allowable limit distance L1 from the outline. Therefore, even if a detection error or the like occurs in the positioning device 16, the work vehicle 10 hardly protrudes from the outline (the first to fourth outlines f11 to f14).

Moreover, in this control method, the allowable limit distance L1 can be changed by changing the margin value L11 used to define the allowable limit distance L1. Therefore, for example, in a situation where there is no risk of contact even if the work vehicle 10 is further moved to the outline (ridge) of the work site F1, such as a case where the work vehicle 10 is traveling at a low speed, it is possible to cause the work vehicle 10 to travel even at a position further moved to the outline of the work site F1 by decreasing the margin value L11 and decreasing the allowable limit distance L1. As a result, there is an advantage that the work vehicle 10 can travel along a more appropriate route.

More specifically, as shown in Fig. 6, the allowable limit distance L1 is set with a reference point Ps1 set for the work vehicle 10 in plan view as a starting point. In the present embodiment, as an example, the reference point Ps1 is set near the center of the machine body 11 of the work vehicle 10 in plan view. However, the reference point Ps1 may be located on the inner side of the machine body 11 of the work vehicle 10 or outer side of the machine body 11 in plan view.

By setting such an allowable limit distance L1, a virtual circle C1 centered on the reference point Ps1 is set as shown in Fig. 6. The virtual circle C1 is a limit virtual line that allows the work vehicle 10 to approach the outline of the work site F1, and its radius is the allowable limit distance L1. Therefore, when the margin value L11 is changed and the allowable limit distance L1 is changed, the size of the virtual circle C1 centered on the reference point Ps1 changes. For example, by decreasing the margin value L11 and decreasing the allowable limit distance L1, the virtual circle C1 becomes small.

When traveling in the work site F1, the work vehicle 10 basically travels along the target route R1 such that the outline of the work site F1 does not come inside the virtual circle C1. Meanwhile, the contact determination between the work vehicle 10 and the ridge (outline) is performed according to the distance from the work vehicle 10 to the ridge, and for example, if the possibility of contact is high, such as a case where the ridge is locally getting close to the target route R1, the contact avoidance processing (stop, detour, or the like of the work vehicle 10) is performed. The allowable limit distance L1 is used for the contact determination at this time, and although it is to be determined that the possibility of contact is high in a case where the ridge is within the allowable limit distance L1 (that is, inside the virtual circle C1), the contact determination is relaxed by decreasing the allowable limit distance L1, and unnecessary contact avoidance processing can be prevented. As described above, when the allowable limit distance L1 decreases and the virtual circle C1 becomes small, the work vehicle 10 can travel even at a position further close to the outline of the work site F1.

The margin value L11 is changed, for example, in accordance with a user operation. Specifically, a setting screen for changing (setting) the margin value L11 is displayed on the operation display unit 23 or the like of the terminal device 20, and the margin value L11 can be changed on the setting screen according to the operation of the operator (user) on the operation display unit 23. As an example, the margin value L11 can be increased or decreased by a predetermined increment (for example, "1 cm") according to the user operation.

Therefore, the operator can adjust the margin value L11 to an arbitrary value and set the allowable limit distance L1 to an arbitrary distance on the setting screen displayed on the operation display unit 23.

By the way, the margin value L11 can be changed according to, for example, the position of the work vehicle 10 on the route (target route R1) when the work vehicle 10 self-travels, the traveling speed (vehicle speed) of the work vehicle 10, the distance from the outline of the work site F1 to the work vehicle 10, and the like. That is, the change processing unit 136 of the control device 13 changes the margin value L11 according to the position of the work vehicle 10, the vehicle speed of the work vehicle 10, the distance from the outline of the work site F1 to the work vehicle 10, and the like. Therefore, the allowable limit distance L1 set based on (the reference point Ps1 of) the work vehicle 10 automatically changes according to the position of the work vehicle 10 on the target route R1, the vehicle speed of the work vehicle 10, the distance from the outline of the work site F1 to the work vehicle 10, and the like.

In the example of Fig. 6, the allowable limit distance L1 set based on the work vehicle 10 is shown for the work vehicle 10 traveling along the outer peripheral route r13 in the self-traveling. In Fig. 6, as an example, the margin value L11 included in the allowable limit distance L1 changes according to the vehicle speed of the work vehicle 10. Basically, as the vehicle speed of the work vehicle 10 increases, the allowable limit distance L1 (margin value L11) increases (becomes longer), and as the vehicle speed of the work vehicle 10 decreases, the allowable limit distance L1 (margin value L11) decreases (becomes shorter).

Alternatively, the margin value L11 included in the allowable limit distance L1 may change according to the distance from the outline of the work site F1 to the work vehicle 10. In this case, basically, as the distance from the outline of the work site F1 to the work vehicle 10 decreases, the allowable limit distance L1 (margin value L11) increases (becomes longer), and as the distance from the outline of the work site F1 to the work vehicle 10 increases, the allowable limit distance L1 (margin value L11) decreases (becomes shorter).

The control method according to the present embodiment further includes performing suppression control of suppressing protrusion of the work vehicle 10 from the outline when the distance from the reference point Ps1 of the work vehicle 10 to the outline becomes equal to or less than the allowable limit distance L1. The "suppression control" herein is, for example, control for preventing the work vehicle 10 from protruding from the outline by deceleration, stop, turn, or the like, or a combination thereof. That is, when the distance from the reference point Ps1 of the work vehicle 10 to the outline becomes equal to or less than the allowable limit distance L1, the travel processing unit 132 of the control device 13 suppresses the protrusion of the work vehicle 10 from the outline by decelerating or stopping the work vehicle 10, for example.

As a result, for example, even when unexpected behavior such as slip of the work vehicle 10 occurs, it is possible to prevent the work vehicle 10 from coming into contact with the ridge or the like outside the work site F1. Here, for example, at the time of low-speed traveling of the work vehicle 10, since the influence when the unexpected behavior such as slip occurs is small, by changing the margin value L11 according to the vehicle speed of the work vehicle 10, it is possible to avoid separating the work vehicle 10 from the outline by making the allowable limit distance L1 larger than necessary.

In the present embodiment, as shown in Fig. 7, the allowable limit distance L1 is at least a distance obtained by adding the margin value L11 to a braking distance L12 corresponding to the vehicle speed of the work vehicle 10. The "braking distance" herein is a distance required for the work vehicle 10 to stop when the braking force acts on the work vehicle 10 traveling. Such a braking distance L12 is not a constant value, and changes according to the vehicle speed (traveling speed) of the work vehicle 10. That is, the braking distance L12 increases (becomes longer) as the vehicle speed of the work vehicle 10 increases, and the braking distance L12 decreases (becomes shorter) as the vehicle speed of the work vehicle 10 decreases.

In other words, the allowable limit distance L1 is the sum of the margin value L11 and the braking distance L12 (L1 = L11 + L12). Therefore, by setting the allowable limit distance L1 from the reference point Ps1 of the work vehicle 10 as a starting point, a double virtual circle of a virtual circle C2 and a virtual circle C1 centered on the reference point Ps1 is set as shown in Fig. 7. The virtual circle C2 is a virtual line with a radius of the braking distance L12 centered on the reference point Ps1. That is, the virtual circle C2 is set on the inner side of the virtual circle C1 by the margin value L11.

By using the allowable limit distance L1 obtained by adding the margin value L11 to the braking distance L12 in this manner, when the work vehicle 10 during self-traveling is stopped, the work vehicle 10 can be stopped at a position not exceeding the outline of the work site F1.

In addition, in the present embodiment, as shown in Fig. 7, the margin value L11 and the braking distance L12 can be individually changed. That is, among the margin value L11 and the braking distance L12 included in the allowable limit distance L1, for example, it is possible to change only the margin value L11 and change only the braking distance L12. Furthermore, for example, the margin value L11 and the braking distance L12 can be changed differently, such as increasing the braking distance L12 while decreasing the margin value L11.

As an example, Fig. 7 shows virtual circles C1 and C2 in a case where the margin value L11 is "large" and the braking distance L12 is "large", in a case where the margin value L11 is "small" and the braking distance L12 is "large", and in a case where the margin value L11 is "small" and the braking distance L12 is "small". As described above, when either the margin value L11 or the braking distance L12 decreases, the virtual circle C1 decreases, and the work vehicle 10 can travel even at a position further close to the outline of the work site F1.

Although Fig. 7 shows an example in which each of the margin value L11 and the braking distance L12 is changed in two stages of "large" and "small", the present invention is not limited to this example, and each of the margin value L11 and the braking distance L12 may be changed in three stages or more, or without stages.

As described above, since the margin value L11 and the braking distance L12 can be individually changed, the allowable limit distance L1 can be set more finely. As a result, it is possible to cause the work vehicle 10 to travel even at a position further close to the outline of the work site F1, and it is possible to cause the work vehicle 10 to travel along a more appropriate route.

In addition, in the present embodiment, the margin value L11 and the braking distance L12 are determined by individually weighting a specific parameter. For example, in a case where the vehicle speed of the work vehicle 10 is used as the specific parameter, it becomes possible to perform weighting by a coefficient "2" on the vehicle speed with respect to the margin value L11 and weighting by a coefficient "1.5" on the vehicle speed with respect to the braking distance L12. In this case, for example, when the vehicle speed increases by "1", the margin value L11 increases by "2", whereas the braking distance L12 increases by "1.5". This makes it possible to individually change the margin value L11 and the braking distance L12 while determining the margin value L11 and the braking distance L12 on the basis of a common specific parameter.

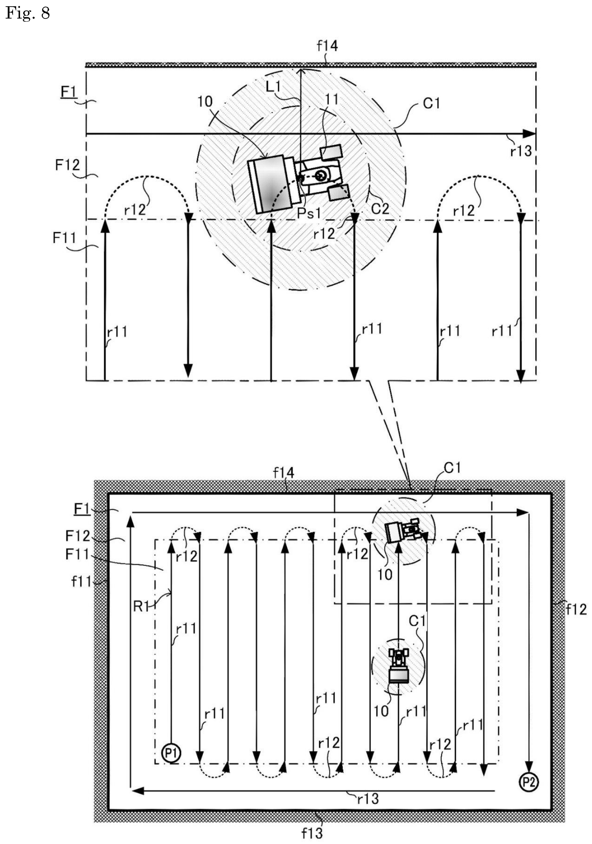

In addition, in the present embodiment, for example, as shown in Fig. 8, since the work vehicle 10 can self-travel along the target route R1, the margin value L11 is changed according to the position of the work vehicle 10 on the target route R1 at least during the self-travel of the work vehicle 10. That is, the margin value L11 is automatically changed depending on where on the target route R1 the work vehicle 10 during self-traveling is traveling.

As a result, the margin value L11 is automatically changed according to the position of the work vehicle 10 on the target route R1, and it is possible to set an appropriate allowable limit distance L1. As an example, when the work vehicle 10 is traveling along the route of the inner region F11 of the work site F1 such as the work route r11, the work vehicle 10 is unlikely to protrude from the outline of the work site F1 even when the unexpected behavior such as slip occurs. Therefore, it is not necessary to set the allowable limit distance L1 too large.

In the example of Fig. 8, the work vehicle 10 traveling along the work route r11 and the work vehicle 10 traveling along the connection route r12 are shown, and the allowable limit distances L1 set based on these work vehicles 10 are different from each other. In Fig. 8, as an example, the allowable limit distance L1 set based on the work vehicle 10 traveling along the work route r11 is set to be smaller than the allowable limit distance L1 set based on the work vehicle 10 traveling along the connection route r12. Therefore, the virtual circle C1 set around the work vehicle 10 traveling along the work route r11 is smaller than the virtual circle C1 set around the work vehicle 10 traveling along the connection route r12.

Here, the connection route r12 is an example of a non-work route on which the work vehicle 10 does not perform work. That is, in the present embodiment, the target route R1 includes the work route r11 on which the work vehicle 10 performs work and a non-work route (connection route r12 or the like) on which the work vehicle 10 does not perform work. In a case where the work vehicle 10 is located on the work route r11, the margin value L11 becomes smaller than a case where the work vehicle 10 is located on the non-work route. While the work vehicle 10 is traveling along a route, such as the work route r11, where the work vehicle 10 is less likely to protrude from the outline of the work site F1 even when the unexpected behavior such as slip occurs, the margin value L11 is decreased and the allowable limit distance L1 is decreased as compared with a case where the work vehicle is traveling along a non-work route (such as the connection route r12). Therefore, while the work vehicle 10 is traveling along a route that is less likely to protrude from the outline of the work site F1, it is possible to suppress a decrease in work efficiency by not setting the allowable limit distance L1 to be larger than necessary.

Here, the work route r11 is an example of a straight route on which the work vehicle 10 travels straight, and the connection route r12 is an example of a turning route on which the work vehicle 10 turns. That is, in the present embodiment, the target route R1 includes a straight route (such as the work route r11) on which the work vehicle 10 travels straight and a turning route (such as the connection route r12) on which the work vehicle 10 turns. In a case where the work vehicle 10 is located on the turning route, the margin value L11 becomes larger than a case where the work vehicle 10 is located on the straight route. While the work vehicle 10 is traveling along a route, such as the turning route (connection route r12, for example), where the work vehicle 10 is highly likely to protrude from the outline of the work site F1 when the unexpected behavior such as slip occurs, the margin value L11 is increased and the allowable limit distance L1 is increased as compared with a case where the work vehicle is traveling along a straight route (such as the work route r11). Therefore, while the work vehicle 10 is traveling along a route that is highly likely to protrude from the outline of the work site F1, it is possible to suppress protrusion of the work vehicle 10 from the outline by securing the allowable limit distance L1 to be large.

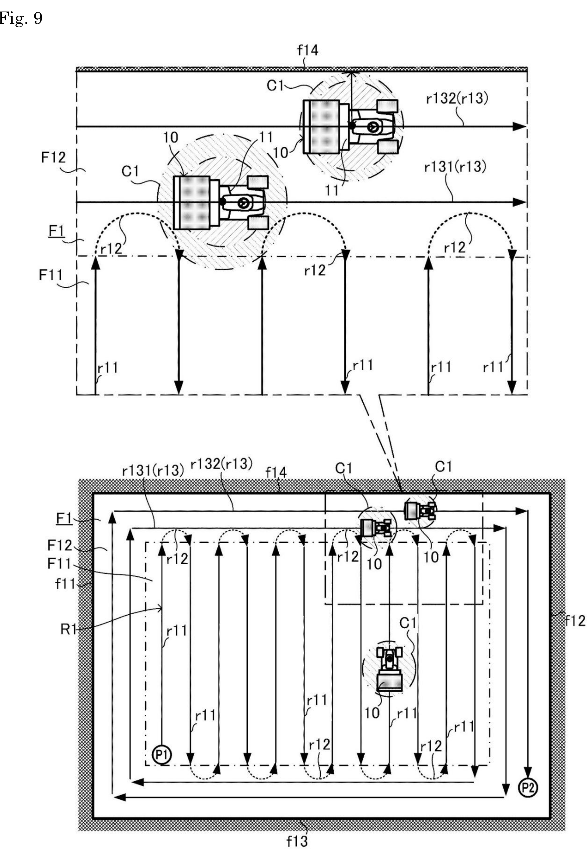

In addition, as shown in Fig. 9, in a case where the outer peripheral route r13 for a plurality of strokes is generated along the outer periphery (outline) of the work site F1 while leaving a width for a plurality of strokes in the outer peripheral region F12 of the work site F1, the margin value L11 may be changed by the outer peripheral route r13. In the example of Fig. 9, the target route R1 includes the outer peripheral route r13 including two rounds of a first outer peripheral route r131 and a second outer peripheral route r132. The first outer peripheral route r131 is located inside the second outer peripheral route r132, and the second outer peripheral route r132 is outside the first outer peripheral route r131, that is, an outermost peripheral route.

In the example of Fig. 9, the work vehicle 10 traveling along the first outer peripheral route r131 and the work vehicle 10 traveling along the second outer peripheral route r132 are shown, and the allowable limit distances L1 set based on these work vehicles 10 are different from each other. In Fig. 9, as an example, the allowable limit distance L1 set based on the work vehicle 10 traveling along the second outer peripheral route r132 is set to be smaller than the allowable limit distance L1 set based on the work vehicle 10 traveling along the first outer peripheral route r131. Therefore, the virtual circle C1 set around the work vehicle 10 traveling along the second outer peripheral route r132 is smaller than the virtual circle C1 set around the work vehicle 10 traveling along the first outer peripheral route r131.

Here, the second outer peripheral route r132 is an example of an outermost peripheral route on which the work vehicle 10 travels circumferentially along the outline. That is, in the present embodiment, the target route R1 includes the outermost peripheral route (the second outer peripheral route r132 or the like) on which the work vehicle 10 travels circumferentially along the outline. In a case where the work vehicle 10 is located on the outermost peripheral route, the margin value L11 becomes smaller than a case where the work vehicle 10 is located on a route other than the outermost peripheral route (such as the first outer peripheral route r131). In the present embodiment, in particular, it is assumed that the margin value L11 is minimized while the work vehicle 10 is traveling along the outermost peripheral route (the second outer peripheral route r132 or the like). The minimum value of the margin value L11 may be 0 or substantially 0. As a result, when the vehicle travels along the outermost peripheral route (the second outer peripheral route r132 or the like), the margin value L11 is decreased and the allowable limit distance L1 is decreased. Therefore, the work vehicle 10 can be brought close to the outline of the work site F1, and the work region with respect to the work site F1 can be made large.

As described above, the margin value L11 (allowable limit distance L1) is not fixed, but is changed according to the traveling state of the work vehicle 10 including the position of the work vehicle 10 and the like. The "traveling state of the work vehicle 10" herein includes not only the position of the work vehicle 10 on the target route R1 during self-traveling as described above, but also, for example, the position of the work vehicle 10 during manual traveling (manual driving), the elapsed time from the start of self-traveling, and the remote operation of the work vehicle 10 by the operator.

As an example, when the work vehicle 10 self-travels along the ridge (outline of the work site F1), it is preferable to decrease the margin value L11 to decrease the allowable limit distance L1. As a result, the work vehicle 10 can be brought close to the outline of the work site F1, and the work region with respect to the work site F1 can be made large. In addition, it is preferable to decrease the margin value L11 to decrease the allowable limit distance L1 until a certain time elapses from the start of self-traveling of the work vehicle 10 (immediately after the start of self-traveling). Furthermore, for example, when the operator remotely operates the work vehicle 10 using the terminal device 20, it is preferable to decrease the margin value L11 to decrease the allowable limit distance L1. In addition, when the work vehicle 10 travels in the vicinity of the specific region regardless of whether the work vehicle 10 self-travels or travels manually, it is preferable to decrease the margin value L11 to decrease the allowable limit distance L1. The "specific region" herein includes, for example, a worked region or an unworked region in the work site F1, a region where self-traveling is prohibited in the work site F1, and the like.

Furthermore, the control method according to the present embodiment further includes designating a change pattern of the margin value L11. Specifically, the margin value L11 is changed or a plurality of change patterns is registered according to the position of the work vehicle 10 on the target route R1, the vehicle speed of the work vehicle 10, the distance from the outline of the work site F1 to the work vehicle 10, or any combination thereof. Then, for example, a setting screen for designating an arbitrary change pattern from among the plurality of change patterns is displayed on the operation display unit 23 or the like of the terminal device 20, and the change pattern can be designated on the setting screen according to the operation of the operator (user) on the operation display unit 23.

As a specific example of the change pattern, it may be defined according to which one of the position of the work vehicle 10 on the target route R1, the vehicle speed of the work vehicle 10, and the distance from the outline of the work site F1 to the work vehicle 10 change each of the margin value L11 and the braking distance L12. As an example, in the first change pattern, the margin value L11 changes according to the position of the work vehicle 10 on the target route R1 and the distance from the outline of the work site F1 to the work vehicle 10, and the braking distance L12 changes only according to the vehicle speed of the work vehicle 10. In the second change pattern, the margin value L11 changes only according to the position of the work vehicle 10 on the target route R1, and the braking distance L12 changes according to the vehicle speed of the work vehicle 10 and the distance from the outline of the work site F1 to the work vehicle 10.

Here, the change pattern may include, for example, a coefficient that defines weighting for the specific parameter. As an example, in the first change pattern, a value obtained by multiplying the vehicle speed as the specific parameter by the coefficient "2" is set as the margin value L11 and the braking distance L12, and in the second change pattern, a value obtained by multiplying the vehicle speed by the coefficient "1.2" is set as the margin value L11 and the braking distance L12. In this case, even if the vehicle speed is the same, the margin value L11 and the braking distance L12 are larger in the first change pattern than in the second change pattern, and it is possible to more reliably suppress the protrusion of the work vehicle 10 from the outline.

In this manner, by making it possible to specify how to change the margin value L11 and the change pattern, it is possible to cause the work vehicle 10 to travel along a more appropriate route. The change pattern may be designated by the user (operator or the like), or may be automatically designated according to, for example, the state of the work site F1 (the degree of mud or the like), the state of the work vehicle 10, or the environment (weather or the like).

In addition, the control method according to the present embodiment further includes invalidating the allowable limit distance L1 in a case where a specific cancel condition is satisfied. The "cancel condition" herein is a condition that requires the work vehicle 10 to be moved to the outside of the work site F1, and is, for example, a condition that the remaining amount of a material (seedling or fuel in the present embodiment) consumed by work on the work vehicle 10 (planting work in the present embodiment) is equal to or less than a determination threshold value. In a case where the work vehicle 10 is a harvester such as a combine harvester, the cancel condition includes that the storage amount of the harvested material is equal to or more than the determination threshold value.

As described above, in a case where the cancel condition is satisfied, the allowable limit distance L1 is temporarily invalidated, so that the work vehicle 10 can move to the outside of the work site F1 without being subjected to suppression control or the like even in a situation where the outline is located within the allowable limit distance L1. The cancel condition may include that the work vehicle 10 reaches the travel end position P2, that is, for example, the end of the work travel along the target route R1.

In addition, the determination threshold value to be compared with the remaining amount of the material during the reciprocation traveling and the determination threshold value to be compared with the remaining amount of the material after the end of the reciprocation traveling may have different values. Specifically, the determination threshold value after the end of the reciprocation traveling is set higher than the determination threshold value during the reciprocation traveling. As a result, even if the amount of the material does not decrease so much at the end of the reciprocation traveling, the material can be replenished before starting the subsequent circumferential traveling.

Furthermore, in a case where the cancel condition is satisfied, the travel processing unit 132 preferably stops the work vehicle 10 as a condition that there is a stop instruction by the operator (user), the work vehicle 10 travels a predetermined distance beyond the outline, the work vehicle 10 travels a predetermined distance from the travel end position P2, or the like. For example, the stop instruction is transmitted from the terminal device 20 to the work vehicle 10 by the user's specific operation on the terminal device 20.

Here, the margin value L11 includes a negative value. That is, the margin value L11 defining the allowable limit distance L1, which is the distance from (the reference point Ps1 of) the work vehicle 10, can take not only a positive (+) value but also a negative (-) value. In a case where the margin value L11 is a negative value, the allowable limit distance L1 can also take a negative value. If the allowable limit distance L1 is a negative value, the reference point Ps1 of the work vehicle 10 is allowed to protrude to the outside of the work site F1 with respect to the outline (the first to fourth outlines f11 to f14) of the work site F1 by an absolute value of the allowable limit distance L1.

For example, there is a case where there is no problem even if at least a part of the machine body 11 (including the work machine 12) protrudes to the outside of the work site F1 due to a height of the ridge around the work site F1, a type of ridge (soil, concrete, or the like), presence or absence of an obstacle around the work site F1, presence or absence of the work machine 12, the work width W1, a lifting state of the work machine 12, presence or absence of turning during traveling of the work vehicle 10, and the like. In a case where it is confirmed that there is no problem even if the machine body 11 protrudes to the outside of the work site F1 at the time of registration of the work site F1 (at the time of teaching travel) or the like, it is possible to travel along a more flexible route by setting the margin value L11 to a negative value as described above.

### [4.3] Overall processing

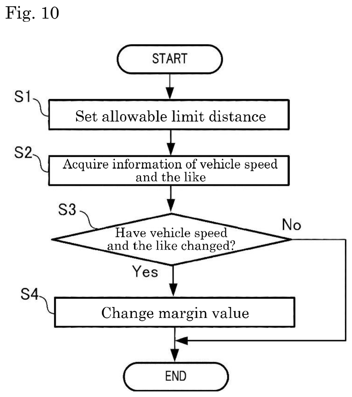

Next, the overall flow of processing related to the change of the margin value L11 in the control method will be described with reference to Fig. 10.

As shown in Fig. 10, the setting processing unit 135 of the control system 1 sets the margin value L11 to default, and sets the allowable limit distance L1 based on the reference point Ps1 of the work vehicle 10 (S1). Then, the control system 1 acquires information such as the position of the work vehicle 10 on the target route R1, the vehicle speed of the work vehicle 10, and the distance from the outline of the work site F1 to the work vehicle 10 (S2).

For example, when a condition for changing the margin value, such as a change in the vehicle speed of the work vehicle 10, is satisfied (S3: Yes), the change processing unit 136 of the control system 1 changes the margin value L11 to change the allowable limit distance L1 (S4). On the other hand, when a condition for changing the margin value, such as a change in the vehicle speed of the work vehicle 10, is not satisfied (S3: No), the control system 1 skips step S4 and ends the series of processing.

However, the flowchart shown in Fig. 10 is merely an example, and processing may be added or omitted as appropriate, or the order of processing may be changed as appropriate.

### [5] Modifications

Modifications of the first embodiment will be described one by one below. The modifications described below can be applied in combination as appropriate.

The control system 1 in the present disclosure includes a computer system. The computer system mainly includes one or more processors and one or more memories as hardware. The processor executes a program (work vehicle control program) recorded in the memory of the computer system to realize a function of the control system 1 in the present disclosure. The program may be recorded in advance in the memory of the computer system, may be provided through a telecommunication line, or may be recorded and provided in a non-transitory recording medium, such as a memory card, an optical disk, or a hard disk drive, which is readable by the computer system. Moreover, some or all of the functional units included in the control system 1 may include an electronic circuit.

In addition, it is not essential for the control system 1 that at least some functions of the control system 1 are integrated in one housing, and the constituents of the control system 1 may be provided in a plurality of housings in a distributed manner. Conversely, in the first embodiment, functions distributed to a plurality of devices (for example, the control device 13 and the terminal device 20) may be integrated into one housing. Furthermore, at least some functions of the control system 1 may be realized by a cloud (cloud computing) or the like.

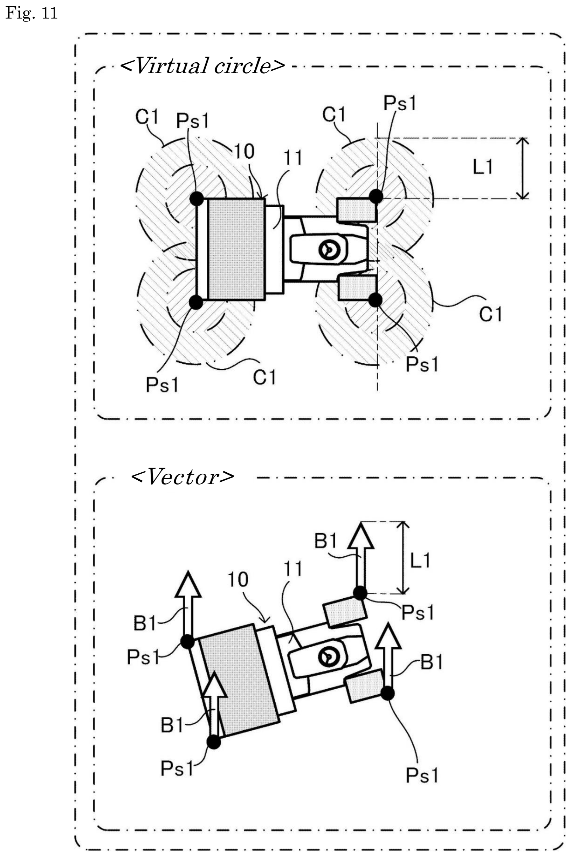

In addition, the allowable limit distance L1 may be set based on the work vehicle 10, and it is not essential to form one virtual circle C1 centered on the reference point Ps1 set in the vicinity of the center of the machine body 11 of the work vehicle 10 in plan view as in the first embodiment. For example, as shown as a "virtual circle" in Fig. 11, the reference point Ps1 may be set at a plurality of locations (for example, four corners) of the machine body 11 of the work vehicle 10 in plan view, and the virtual circle C1 having a radius of the allowable limit distance L1 may be set from each of the plurality of reference points Ps1. In addition, as shown as a "vector" in Fig. 11, the allowable limit distance L1 may be set by a vector B1 extending in one direction from the reference point Ps1. The vector B1 has a specific direction, for example, so as to extend toward the closest outline or toward the front in the advancing direction of the machine body 11.

In addition, the function of changing the margin value L11 as described above is not limited to the self-traveling of the work vehicle 10, and functions similarly even during the manual traveling (manual driving) by the manual operation of the operator.

In addition, the terminal device 20 is not limited to a general-purpose terminal such as a tablet terminal, a smartphone, or a laptop computer, and may be configured as a dedicated terminal. Furthermore, a plurality of terminal devices 20 may be associated with one work vehicle 10, and in this case, one work vehicle 10 can be controlled by the plurality of terminal devices 20. Conversely, one terminal device 20 may be associated with the plurality of work vehicles 10, and in this case, the plurality of work vehicles 10 can be controlled by one terminal device 20.

In addition, the target route R1 described above is merely an example, and can be changed as appropriate. For example, the work direction of the work vehicle 10 (the direction of the work route r11) and/or the travel order of the work route r11 can also be changed as appropriate.

### (Second embodiment)

A work system 100 according to the present embodiment is different from that of the first embodiment in that the position of a reference point Ps1 in plan view can be changed. Hereinafter, the common reference numerals are assigned to configurations similar to those of the first embodiment, and the descriptions thereof are omitted as appropriate.

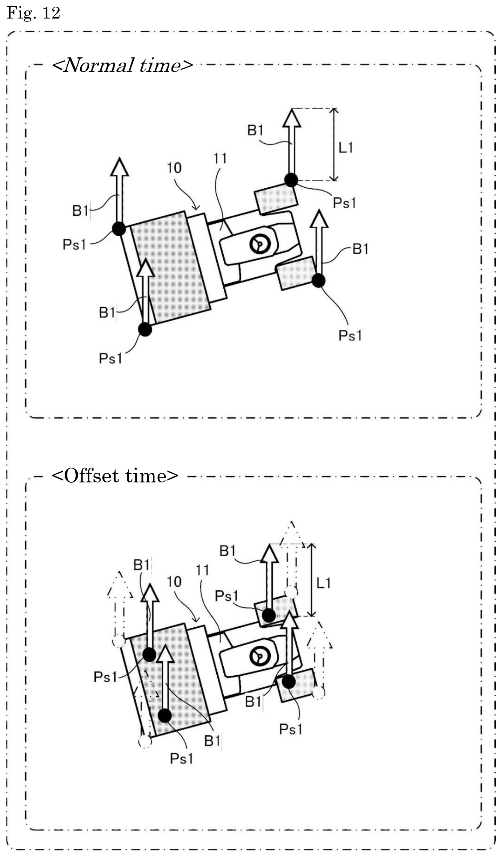

For example, as shown in the upper part (normal time) of Fig. 12, it is assumed that the reference point Ps1 is set at a plurality of locations (four corners as an example) of a machine body 11 of a work vehicle 10 in plan view. Here, it is assumed that an allowable limit distance L1 is set by a vector B1 extending in one direction from the reference point Ps1. The vector B1 has a specific direction, for example, so as to extend toward the closest outline or toward the front in the advancing direction of the machine body 11.

In this case, as shown in the lower part (offset time) of Fig. 12, the positions of the plurality of (here, four) reference points Ps1 in plan view are changed to the center side of the machine body 11 (the inner side of the machine body 11) of the work vehicle 10. For example, the reference point Ps1 set at the right front corner of the machine body 11 is offset to the left rear side. In the lower part (at the time of offset) of Fig. 12, the reference point Ps1 and the vector B1 before the change are indicated by imaginary lines (two-dot chain lines).

As described above, in the present embodiment, since the position of the reference point Ps1 is not fixed but can be changed, even if the allowable limit distance L1 from the reference point Ps1 is constant, the allowable limit distance as viewed from the center of the machine body 11 of the work vehicle 10 in plan view can be changed. For example, as shown in Fig. 12, in a case where the positions of the plurality of reference points Ps1 are offset toward the center side of the machine body 11 of the work vehicle 10 in plan view, the allowable limit distance as viewed from the center of the machine body 11 of the work vehicle 10 in plan view decreases.

The position of the reference point Ps1 in plan view is changed according to the traveling state of the work vehicle 10 including the position of the work vehicle 10 and the like. In particular, in the traveling state described below, it is preferable to substantially decrease the allowable limit distance as viewed from the center of the machine body 11 of the work vehicle 10 in plan view by offsetting the plurality of reference points Ps1 toward the center side of the machine body 11 (the inner side of the machine body 11) in plan view. That is, the plurality of reference points Ps1 in plan view is offset toward the center side of the machine body 11 (the inner side of the machine body 11) when the work vehicle 10 self-travels along a ridge (the outline of the work site F1), when the work vehicle 10 is remotely operated by an operator until a certain time elapses from the start of self-travel of the work vehicle 10 (immediately after the start of self-travel), and/or when the work vehicle 10 travels in the vicinity of a specific region regardless of whether the work vehicle self-travels or travels manually.

As described above, for example, when the work vehicle 10 self-travels along the ridge, by offsetting the plurality of reference points Ps1 in plan view to the center side of the machine body 11 (the inner side of the machine body 11), the work vehicle 10 can be brought close to the outline of the work site F1 to the utmost extent, and the work region with respect to the work site F1 can be made large.

In addition, since the positions of the plurality of reference points Ps1 in the plan view are offset toward the center side of the machine body 11 of the work vehicle 10, the allowable limit distance can be set in a range equivalent to a range in which the allowable limit distance L1 viewed from the plurality of reference points Ps1 originally (that is, at normal time) is set to a negative (-) value. As a result, even in a case where the allowable limit distance L1 is set by the vector B1 extending in one direction from the reference point Ps1, an operation equivalent to setting a margin value L11 to a negative value and setting the allowable limit distance to a negative value can be realized.

In addition, the change of the position of the reference point Ps1 in plan view is not limited to the case where the reference point Ps1 is set at the four corners of the machine body 11 of the work vehicle 10 in plan view, and can be applied to a case where an arbitrary reference point Ps1 is set. Furthermore, the change of the position of the reference point Ps1 in plan view is not limited to the case where the allowable limit distance L1 is set by the vector B1 extending in one direction from the reference point Ps1, and can be applied to a case where the virtual circle C1 whose radius is the allowable limit distance L1 is set from the reference point Ps1.

In addition, for example, a plurality of positions of the reference point Ps1 may be registered in advance, and the change of the position of the reference point Ps1 in plan view may be performed by switching the position of the reference point Ps1 among the plurality of positions of the reference point Ps1. In the example of Fig. 12, the positions of the plurality of reference points Ps1 at the "normal time" shown in the upper part and the positions of the plurality of reference points Ps1 at the "offset time" shown in the lower part are registered in advance, and the positions of the plurality of reference points Ps1 in plan view are changed by switching between the "normal time" and the "offset time".

The configurations of the second embodiment (including the modifications) can be employed in combination with various configurations described in the first embodiment (including the modifications) as appropriate.

### (Third embodiment)

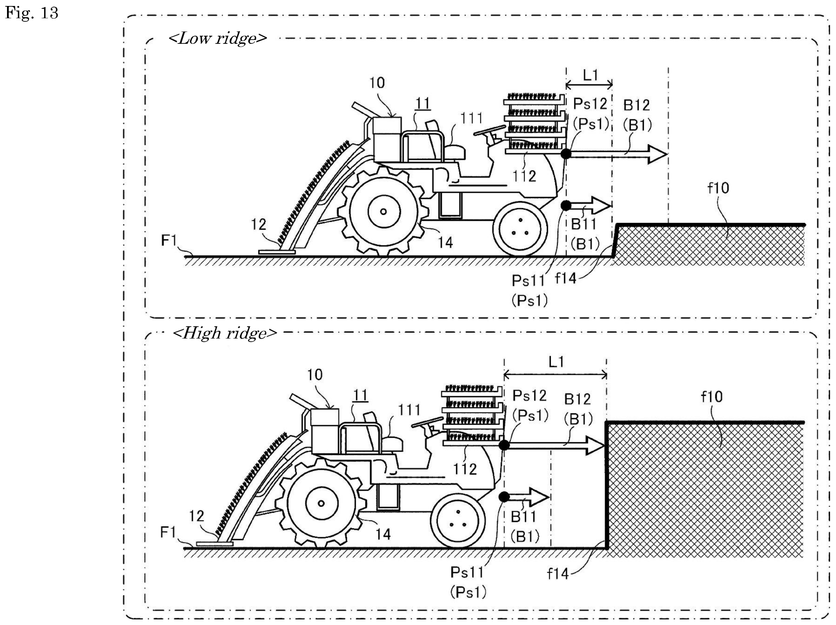

As shown in Fig. 13, a work system 100 according to the present embodiment is different from that of the first embodiment in that an allowable limit distance L1 can be changed according to the target height. Hereinafter, the common reference numerals are assigned to configurations similar to those of the first embodiment, and the descriptions thereof are omitted as appropriate.

In Fig. 13, it is assumed that a reference point Ps1 is set at a plurality of locations (four corners as an example) of a machine body 11 of a work vehicle 10 in plan view. Here, it is assumed that the allowable limit distance L1 is set by a vector B1 extending in one direction from the reference point Ps1. The vector B1 has a specific direction, for example, so as to extend toward the closest outline or toward the front in the advancing direction of the machine body 11.

In the present embodiment, a plurality of types of reference points Ps1 is registered in advance in a height direction (up-down direction D1), and the allowable limit distance L1 is switched by switching the reference point Ps1 among the plurality of types of reference points Ps1. In the example of Fig. 13, two types of reference points Ps11 and Ps12 are registered in the height direction, and vectors B11 and B12 having different lengths (allowable limit distance L1) are set for each of the reference points Ps11 and Ps12. Here, the length of the vector B11 extending from the reference point Ps11 located at the low position is shorter than the length of the vector B12 extending from the reference point Ps12 located at the high position.

In the present embodiment, the allowable limit distance L1 is not fixed but is changed by the target height. The "target height" herein is a height of an object to be collision-avoided in the work vehicle 10, and is, for example, a height of a side ridge f10 located outside a work site F1 of an outline. For example, as shown in the upper part (low ridge) of Fig. 13, in a case where the height of the ridge f10 is lower than the reference height, the lower-side reference point P11 is selected from two types of reference points Ps11 and Ps12. As a result, the allowable limit distance L1 is set smaller by the shorter vector B11 extending from the reference point Ps11.

On the other hand, for example, as shown in the lower part (high ridge) of Fig. 13, in a case where the height of the ridge f10 is higher than the reference height, the higher-side reference point Ps12 is selected from the two types of reference points Ps11 and Ps12. As a result, the allowable limit distance L1 is set larger by the longer vector B12 extending from the reference point Ps12.

In the present embodiment, as an example, the reference height is set based on the lower end height of a structure located at a certain height from the ground (the ground contact surface of front wheels 141 and rear wheels 142), such as a preliminary seedling mount 112 of the work vehicle 10.

Therefore, as shown in the upper part of Fig. 13, in a case where the height of the ridge f10 is lower than the reference height (low ridge), there is no risk that the preliminary seedling mount 112 comes into contact with the ridge f10. Therefore, by setting the allowable limit distance L1 to be small, the work vehicle 10 can be brought close to the outline of the work site F1 to make the work region with respect to the work site F1 large. On the other hand, as shown in the lower part of Fig. 13, in a case where the height of the ridge f10 is higher than the reference height (high ridge), it is possible to avoid contact of the preliminary seedling mount 112 with the ridge f10 by setting the allowable limit distance L1 to be large.

The target height, that is, the height of the ridge f10 ("low ridge" or "high ridge") may be determined based on, for example, ridge information indicating whether the ridge is "low ridge" or "high ridge" included in field information or the like, or may be automatically determined based on an output of a distance measuring sensor that detects (the height of) the ridge f10.

In addition, the change of the allowable limit distance L1 according to the target height (the height of the ridge f10) is not limited to the case where the reference point Ps1 is set at the four corners of the machine body 11 of the work vehicle 10 in plan view, and can be applied to a case where an arbitrary reference point Ps1 is set. Furthermore, the change of the allowable limit distance L1 according to the target height (the height of the ridge f10) is not limited to the case where the allowable limit distance L1 is set by the vector B1 extending in one direction from the reference point Ps1, and can be applied to a case where the virtual circle C1 whose radius is the allowable limit distance L1 is set from the reference point Ps1.

In addition, a plurality of types of reference points Ps1 is registered in advance in the height direction (up-down direction D1), and it is not essential to switch the allowable limit distance L1 by switching the reference point Ps1 among the plurality of types of reference points Ps1. For example, even at the same reference point Ps1, the allowable limit distance L1 can be changed according to the target height (height of the ridge f10) by changing a margin value L11.

The configurations of the third embodiment (including the modifications) can be employed in combination with various configurations described in the first embodiment or the second embodiment (including the modifications) as appropriate.

### [Additional notes of invention]

Hereinafter, an overview of the invention extracted from the above-described embodiments will be additionally described. Note that configurations and processing functions described in the following additional notes can be selected to be combined as desired.

### <Additional note 1>

A control method for a work vehicle capable of working while traveling in a work site, the control method including:
setting an allowable limit distance that is defined using a margin value based on the work vehicle and is a limit that allows the work vehicle to approach an outline of the work site; and
changing the margin value.

### <Additional note 2>

The control method for a work vehicle according to additional note 1, in which
the allowable limit distance is at least a distance obtained by adding the margin value to a braking distance corresponding to a vehicle speed of the work vehicle.

### <Additional note 3>

The control method for a work vehicle according to additional note 2, in which
the margin value and the braking distance can be individually changed.

### <Additional note 4>

The control method for a work vehicle according to additional note 3, in which
the margin value and the braking distance are determined by individually weighting a specific parameter.

### <Additional note 5>

The control method for a work vehicle according to any of additional notes 1 to 4, further including
performing suppression control of suppressing protrusion of the work vehicle from the outline when a distance from a reference point of the work vehicle to the outline becomes equal to or less than the allowable limit distance.

### <Additional note 6>

The control method for a work vehicle according to additional note 5, further including
changing a position of the reference point in plan view according to a traveling state of the work vehicle.

### <Additional note 7>

The control method for a work vehicle according to any of additional notes 1 to 6, in which
the work vehicle can self-travel along a target route, and
the margin value is changed according to a position of the work vehicle on the target route during self-traveling of the work vehicle.

### <Additional note 8>

The control method for a work vehicle according to additional note 7, in which
the target route includes a work route on which the work vehicle performs work and a non-work route on which the work vehicle does not perform work, and
in a case where the work vehicle is located on the work route, the margin value becomes smaller than a case where the work vehicle is located on the non-work route.

### <Additional note 9>

The control method for a work vehicle according to additional note 7 or 8, in which
the target route includes a straight route on which the work vehicle travels straight and a turning route on which the work vehicle turns, and
in a case where the work vehicle is located on the turning route, the margin value becomes larger than a case where the work vehicle is located on the straight route.

### <Additional note 10>

The control method for a work vehicle according to any of additional notes 7 to 9, in which
the target route includes an outermost peripheral route on which the work vehicle travels circumferentially along the outline, and
in a case where the work vehicle is located on the outermost peripheral route, the margin value becomes smaller than a case where the work vehicle is located on a route other than the outermost peripheral route.

### <Additional note 11>

The control method for a work vehicle according to any of additional notes 1 to 10, further including
invalidating the allowable limit distance in a case where a specific cancel condition is satisfied.

### <Additional note 12>

The control method for a work vehicle according to any of additional notes 1 to 11, further including
designating a change pattern of the margin value.

### <Additional note 13>

The control method for a work vehicle according to any of additional notes 1 to 12, in which
the margin value is changed according to a user operation.

### <Additional note 14>

The control method for a work vehicle according to any of additional notes 1 to 13, in which
the margin value includes a negative value.

### <Additional note 15>

The control method for a work vehicle according to any of additional notes 1 to 14, further including
changing the allowable limit distance according to a target height.

### <Additional note 16>

A work vehicle control program for causing one or more processors to execute
the control method for a work vehicle according to any of additional notes 1 to 15.

### LIST OF REFERENCE SIGNS

- 1: Work vehicle control system
- 10: Work vehicle
- 11: Machine body
- 100: Work system
- 135: Setting processing unit
- 136: Change processing unit
- F1: Work site
- f11 to f14: First to fourth outlines (outline)
- L1: Allowable limit distance
- L11: Margin value
- L12: Braking distance
- Ps1: Reference point
- R1: Target route (route)
- r11: Work route (straight route)
- r12: Connection route (non-work route, turning route)
- r132: Second outer peripheral route (outermost peripheral route)

## Claims

1. A control method for a work vehicle capable of working while traveling in a work site, the control method comprising:
setting an allowable limit distance that is defined using a margin value based on the work vehicle and is a limit that allows the work vehicle to approach an outline of the work site; and
changing the margin value.

2. The control method for a work vehicle according to claim 1, wherein
the allowable limit distance is at least a distance obtained by adding the margin value to a braking distance corresponding to a vehicle speed of the work vehicle.

3. The control method for a work vehicle according to claim 2, wherein
the margin value and the braking distance can be individually changed.

4. The control method for a work vehicle according to claim 3, wherein
the margin value and the braking distance are determined by individually weighting a specific parameter.

5. The control method for a work vehicle according to any one of claims 1 to 4, further comprising
performing suppression control of suppressing protrusion of the work vehicle from the outline when a distance from a reference point of the work vehicle to the outline becomes equal to or less than the allowable limit distance.

6. The control method for a work vehicle according to claim 5, further comprising
changing a position of the reference point in plan view according to a traveling state of the work vehicle.

7. The control method for a work vehicle according to any one of claims 1 to 4, wherein
the work vehicle can self-travel along a target route, and
the margin value is changed according to a position of the work vehicle on the target route during self-traveling of the work vehicle.

8. The control method for a work vehicle according to claim 7, wherein
the target route includes a work route on which the work vehicle performs work and a non-work route on which the work vehicle does not perform work, and
in a case where the work vehicle is located on the work route, the margin value becomes smaller than a case where the work vehicle is located on the non-work route.

9. The control method for a work vehicle according to claim 7, wherein
the target route includes a straight route on which the work vehicle travels straight and a turning route on which the work vehicle turns, and
in a case where the work vehicle is located on the turning route, the margin value becomes larger than a case where the work vehicle is located on the straight route.

10. The control method for a work vehicle according to claim 7, wherein
the target route includes an outermost peripheral route on which the work vehicle travels circumferentially along the outline, and
in a case where the work vehicle is located on the outermost peripheral route, the margin value becomes smaller than a case where the work vehicle is located on a route other than the outermost peripheral route.

11. The control method for a work vehicle according to any one of claims 1 to 4, further comprising
invalidating the allowable limit distance in a case where a specific cancel condition is satisfied.

12. The control method for a work vehicle according to any one of claims 1 to 4, further comprising
designating a change pattern of the margin value.

13. The control method for a work vehicle according to any one of claims 1 to 4, wherein
the margin value is changed according to a user operation.

14. The control method for a work vehicle according to any one of claims 1 to 4, wherein
the margin value includes a negative value.

15. The control method for a work vehicle according to any one of claims 1 to 4, further comprising
changing the allowable limit distance according to a target height.

16. A work vehicle control program for causing one or more processors to execute
the control method for a work vehicle according to any one of claims 1 to 4.

17. A work vehicle control system used for a work vehicle capable of working while traveling in a work site, the work vehicle control system comprising:
a setting processing unit that sets an allowable limit distance that is defined using a margin value based on the work vehicle and is a limit that allows the work vehicle to approach an outline of the work site; and
a change processing unit that changes the margin value.

18. A work system comprising:
the work vehicle control system according to claim 17; and
a machine body of the work vehicle.
